# EUROPÄISCHE PATENTSCHRIFT

(11) **EP 1 616 652 B1**
(45) Veröffentlichungstag und Bekanntmachung des Hinweises auf die Patenterteilung: **09.09.2009**
(21) Anmeldenummer: 05009930.8
(22) Anmeldetag: 06.05.2005
(51) Int. Cl.: B23G 7/02, B24B 3/18

(54) **Werkzeug zur spanlosen Fertigerzeugung eines vorerzeugten Gewindes, Verfahren zur Herstellung eines derartigen Werkzeugs und Verfahren zur Erzeugung eines Gewindes**
Tool for the finish forming without chip removal of a preformed thread, method of manufacturing such a tool and method of producing a thread
Outil pour le finissage sans enlèvement de copeaux d'un taraudage préformé, procédé de fabrication de cet outil et procéde de réalisation d'un taraudage

(30) Priorität: 12.07.2004 DE 102004033772
(43) Veröffentlichungstag der Anmeldung: 18.01.2006
(73) Patentinhaber: EMUGE-Werk Richard Glimpel GmbH & Co.KG Fabrik für Präzisionswerkzeuge, 91207 Lauf (DE)
(72) Erfinder: Hechtle, Dietmar, Dipl.-Ing., 91257 Pegnitz (DE); Glimpel, Helmut, Dipl.-Ing., 91207 Lauf (DE)
(74) Vertreter: Schröer, Gernot H.

(56) Entgegenhaltungen:
- EP-A- 1 134 051
- EP-A1- 1 106 292
- BE-A- 396 577
- DE-A1- 1 527 200
- DE-A1- 19 649 190
- JP-A- 2001 009 637
- US-A1- 2003 224 864
- DATABASE WPI Week 198501 Derwent Publications Ltd., London, GB; AN 1985-004486 XP002426026 -& SU 1 090 513 A (RIKMAN S F) 7. Mai 1984 (1984-05-07)
- DATABASE WPI Week 198902 Derwent Publications Ltd., London, GB; AN 1989-014942 XP002426027 -& SU 1 407 710 A (RIKMAN S F) 7. Juli 1988 (1988-07-07)

## Beschreibung

Die Erfindung betrifft ein Werkzeug gemäß dem Oberbegriff des Anspruchs 1, insbesondere einen Gewindefurcher, ausgebildet und bestimmt zur spanlosen Fertigerzeugung eines vorerzeugten Gewindes, insbesondere Innengewindes, ein Verfahren zur Herstellung eines derartigen Werkzeugs und ein Verfahren zur Erzeugung eines Gewindes gemäß dem Oberbegriff des Anspruch 23. Ein solches Werkzeug ist aus der DE 199 58 827 bekannt. Ein solches Verfahren zur Herstellung eines Gewindes ist aus der JP 2001-9637 A bekannt.

Zum Erzeugen von Gewinden, insbesondere Gewinden für Schraubverbindungen, sind verschiedene Werkzeuge bekannt. Viele dieser Werkzeuge weisen in ihrem Arbeitsbereich Schneidteile oder Schneiden auf zum spanabhebenden Erzeugen der Gewinde. Zu den spanabhebenden Gewindeerzeugungswerkzeugen zählen beispielsweise Gewindeschneidwerkzeuge, Gewindebohrer und Gewindefräser. Eine weitere Form der Gewindeerzeugung basiert auf einer Umformung des Werkstücks. Hierfür sind Gewindeerzeugungswerkzeuge bekannt und im Einsatz, die durch Druck eine Kaltverformung des Werkstückes erzielen. Zu diesen spanlosen Gewindeerzeugern gehören die sogenannten Gewindefurcher. Der Vorteil dieser Werkzeuge ist, dass durch die Verformung der Oberfläche und die damit verbundene Verfestigung die Härte des Werkstoffs im Bereich des Gewindeprofils ansteigt und somit ein verschleißfesteres Gewinde erzeugt wird.

Bekannte Gewindefurcher, insbesondere zur Innengewindeerzeugung, umfassen einen Schaft und einen Arbeitsbereich. Der Schaft ist in der Regel zylindrisch ausgeführt und mit seinem dem Werkstück abgewandten Ende im Spannfutter einer Gewindeerzeugungseinrichtung aufgenommen und gehalten. Der Arbeitsbereich befindet sich auf der dem Schaft gegenüberliegenden Seite des Gewindefurchers.

Der Arbeitsbereich ist mit einem entlang des Umfangs spiralförmig umlaufenden Gewinde versehen, das die Gegenform zu dem zu erzeugenden Gewinde darstellt. Im Längsschnitt bzw. im Gewindeprofil weist der Gewindefurcher also abwechselnd Erhöhungen (Zähne bzw. Formkeile bzw. Drückstollen) und Vertiefungen (Rillen bzw. Ausnehmungen) auf, die normalerweise jeweils denselben Abstand zueinander besitzen, was bedeutet, dass die Steigung der Gewindegänge konstant ist. Die Zähne bzw. Formkeile sind in ihrem Querschnitt im Wesentlichen radial nach außen spitzwinkelig zulaufend ausgebildet. Der Querschnitt eines Gewindeganges am Werkzeug ist in der Regel ein Polygon.

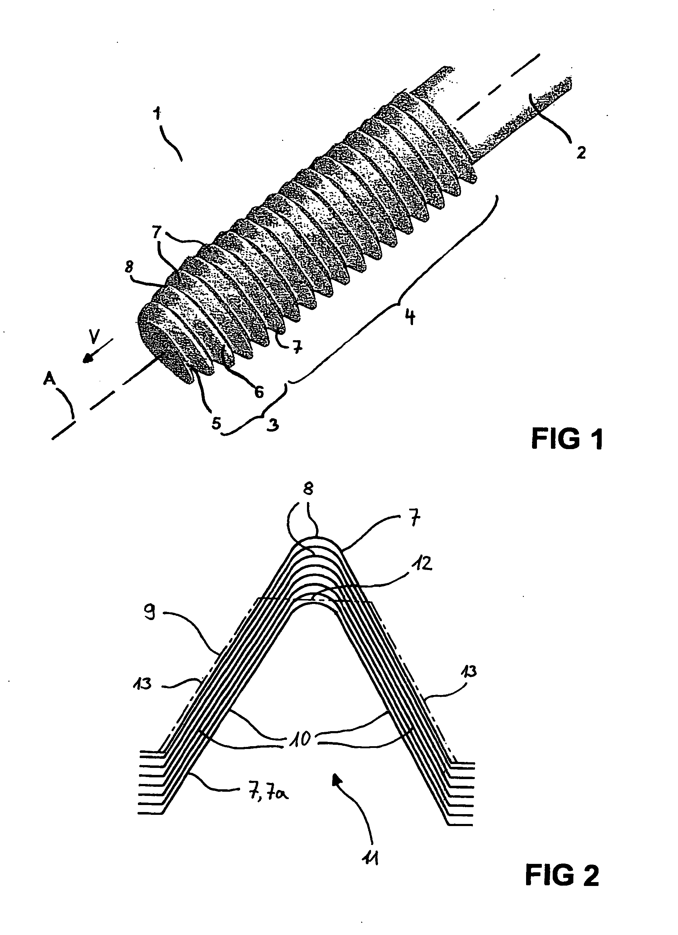

Der prinzipielle Aufbau eines Gewindefurchers ist in FIG 1 dargestellt und untenstehend erläutert. Ein Gewindefurcher dieser Art ist beispielsweise aus DE 199 58 827 A1 bekannt. Derartige Gewindefurcher erzeugen ein Gewinde üblicherweise dadurch, dass sie in eine bereits vorhandene Bohrung mit dem Arbeitsbereich voran mit einem entsprechenden Vorschub und unter Drehung um die Längsachse des Werkzeugschafts eingeführt werden. Dabei werden die Formkeile des Gewindefurchers in die Oberfläche des Werkstücks bzw. der Bohrung gedrückt. Der Werkstoff des Werkstücks wird dabei im Wesentlichen radial in die Vertiefungen des Arbeitsbereichs des Gewindefurchers gedrängt. Um das Eindringen der ersten Gewindegänge in die Werkstückoberfläche bzw. die Innenwand der Bohrung zu erleichtern, verjüngt sich in der Regel der Arbeitsbereich des Gewindefurchers zur Werkzeugspitze hin. Die Formkeile des sich verjüngenden Abschnitt des Arbeitsbereichs, auch Formgebungsteil oder Formgebungsbereich genannt, bewirken die Verformung des Werkstücks zur Erzeugung des Gewindes.

Aus WO 02/094491 A1 oder DE 103 18 203 A1 sind spanlos arbeitende Gewindeformwerkzeuge und Verfahren zur spanlosen Gewindeerzeugung bekannt geworden, die auf einem anderen Arbeitsprinzip beruhen und als Zirkulargewindeformer bzw. Zirkulargewindeformen bezeichenbar sind. Diese Gewindeformwerkzeuge umfassen Arbeitsbereiche mit einem oder mehreren durch Ringnuten voneinander getrennten ringförmigen Umfangsprofilen(en) oder Profilvorsprüngen. Jedes Umfangsprofil ist in seinem Zentrum polygonal mit mehreren Polygonecken als Formkeile ausgebildet und senkrecht zur Drehachse des Werkzeugs ohne Steigung angeordnet. Zusätzlich können auch axial verlaufende Nuten zwischen den einzelnen Drückstollen an der Außenfläche des Werkzeugs zum Zuführen von Kühlflüssigkeit vorgesehen sein. Das Werkzeug wird unter Drehung um seine eigene Achse in eine Bohrung mit größerem Durchmesser als das Werkzeug eingeführt und vollführt eine kreisförmige Bewegung entlang des Umfangs der Bohrung sowie zugleich eine Vorschubbewegung in die Bohrung und formt dadurch spanlos das Gewinde in der Bohrung.

Bei derartigen Gewindeerzeugungen mit Gewindefurchern oder Zirkulargewindeformern wird das Gewinde vollständig durch Furchen oder Formen mittels der Formkeile ausgebildet. Die Formkeile sind dabei großen Belastungen und damit hohem Verschleiß ausgesetzt.

Um diese Belastung zu reduzieren, ist es daher bekannt, das Gewinde in einem vorgeschalteten Arbeitsgang vorzuerzeugen. Hierunter ist zu verstehen, dass vor der eigentlichen Gewindeerzeugung durch Furchen mittels der Formkeile bereits Ausnehmungen in die Bohrungs- bzw. Werkstückoberfläche eingebracht werden, die das zu fertigende Gewinde zwar bereits erkennen lassen, jedoch die Abmessungen der Querschnittsform der Ausnehmung, insbesondere die Ausnehmungstiefe, noch nicht denjenigen der Querschnittsform des fertigen Gewindes, insbesondere deren Tiefe, entsprechen. Dies bedeutet insbesondere, dass der Außendurchmesser des vorerzeugten Gewindes kleiner als der Außendurchmesser des fertigerzeugten Gewindes ist. Das vorerzeugte Gewinde wird dann mittels eines Gewindefurchers fertigerzeugt, d.h. Formkeile werden nacheinander in den Boden der vorerzeugten Ausnehmung gedrückt zur fertigen Gewindeausbildung.

Die Vorerzeugung des Gewindes kann mit einem spanabhebenden Werkzeug erfolgen, so dass sich bei diesem zweistufigen Verfahren zur Gewindeerzeugung die Vorteile spanabhebender und spanloser Gewindeerzeugung kombinieren lassen.

Ein derartiges Verfahren zur Gewindeerzeugung ist beispielsweise aus DE 196 49 190 C2 bekannt. Bei diesem Verfahren wird das Gewinde mittels eines spanabhebenden und furchenden Werkzeugs erzeugt, wobei das Gewinde spanabhebend in den Gewindeflanken profil- und maßgenau und im Gewindegrund mit einem derartigen Durchmesseraufmaß erzeugt wird, dass der Gewindegrund mittels eines Furchwerkzeugs auf den vorbestimmten Enddurchmesser verdichtet wird. Mit diesem Verfahren lassen sich verfestigte Gewinde, insbesondere Innengewinde, erzeugen. Ein vergleichbares Verfahren ist auch aus JP 2001 009 637 A bekannt.

Bekannte Gewindefurcher, die für die Fertigerzeugung eines vorerzeugten Gewindes eingesetzt werden, weisen einen Formgebungsbereich mit Formkeilen entlang einer Spiralkurve auf, deren Querschnittsform und Querschnittsabmessungen jeweils identisch sind und die sich lediglich in ihrem radialen Abstand der Formkeilspitzen von eine Werkzeuglängsachse unterscheiden. Dabei nimmt der radiale Abstand der Formkeilspitzen entgegen der Vorschubrichtung des Werkzeugs zu, d.h. die nachfolgenden Formkeile dringen tiefer in die Werkstückoberfläche ein als die vorausgehenden. Diese radiale Verschiebung des Formkeilquerschnitts gemäß dem Stand der Technik ist beispielhaft in FIG 2 dargestellt und untenstehend erläutert.

Bei diesen bekannten Gewindefurcherausbildungen für das Fertigerzeugen eines vorerzeugten Gewindes ist die Positionierung insbesondere der Formkeile nahe der Werkzeugspitze in der vorerzeugten Gewindeausnehmung nicht exakt vorgegeben, sondern weist einen Freiheitsgrad entlang der Werkzeugachse auf. Dies ergibt sich - wie auch in FIG 2 ersichtlich ist - daraus, dass der Formkeildurchmesser in jeweils entsprechender Höhe über der Werkzeugachse kleiner ist als der Ausnehmungsdurchmesser. Dies führt dazu, dass insbesondere der erste bzw. die vordersten Formkeile an der Werkzeugspitze nicht mittig, sondern seitlich versetzt in die Oberfläche der vorerzeugte Gewindeausnehmung gedrückt wird bzw. werden. Insbesondere liegt hierbei eine der Flanken des Formkeils an einer Flanke der vorerzeugten Gewindeausnehmung an.

Es ist daher Aufgabe der Erfindung, ein Werkzeug zur spanlosen Fertigerzeugung eines vorerzeugten Gewindes, insbesondere einen Gewindefurcher, anzugeben, bei dem Positionierung des Werkzeugs in einem vorerzeugten Gewinde verbessert ist. Ferner soll ein Verfahren zur Herstellung eines derartigen Werkzeugs und ein im Vergleich zum Stand der Technik verbessertes Verfahren zur Erzeugung eines Gewindes angegeben werden.

Diese Aufgabe wird hinsichtlich des Werkzeugs zur spanlosen Fertigerzeugung eines vorerzeugten Gewindes gelöst durch die Merkmale des Patentanspruchs 1, hinsichtlich des Verfahrens zur Herstellung des Werkzeugs durch die Merkmale des Anspruchs 22 und hinsichtlich des Verfahrens zur Erzeugung eines Gewindes durch die Merkmale des Patentanspruchs 23. Vorteilhafte Ausgestaltungen und Weiterbildungen ergeben sind jeweils aus den abhängigen Ansprüchen.

Gemäß Anspruch 1 ist das Werkzeug ausgebildet und bestimmt zur spanlosen Fertigerzeugung eines vorerzeugten Gewindes,
a) umfassend wenigstens einen um eine Werkzeugachse drehbaren oder drehenden Formgebungsbereich mit mehreren aufeinanderfolgend angeordneten Formkeilen (oder: Furchzahn, Drückstollen, Drückstege),
b) wobei die Formkeile im Querschnitt zwei Flanken aufweisen, die ausgehend von einer Formkeilspitze (oder: Formkeilkopf), die insbesondere einen spitzen Winkel oder eine Abrundung oder eine Abflachung ausbildet, auseinanderlaufen,
c) wobei mindestens eine der Flanken zumindest eines Formkeils, mindestens eine Verbreiterung aufweist zur Positionierung, insbesondere Zentrierung, des Formkeils im vorerzeugten Gewinde.

Der der Erfindung gemäß Anspruch 1 zugrundeliegende wesentliche Gedanke ist somit, durch das Ausbilden von Verbreiterungen an den Flanken der Formkeile den Durchmesser der Formkeile zumindest in einem Teilbereich gegenüber dem Durchmesser der aus dem Stand der Technik bekannten Formkeile zu erhöhen. Dadurch reduziert sich in diesem Teilbereich der Abstand zwischen den Formkeilflanken und den entsprechenden Flanken des vorerzeugten Gewindes.

Die mit der Erfindung erzielten Vorteile bestehen insbesondere darin, dass durch die Verbreiterung der Flanken des Formkeils der axiale Freiheitsgrad für die Positionierung des Formkeils im vorerzeugten Gewinde im Vergleich zum Stand der Technik zumindest reduziert ist. Dadurch wird der seitliche Versatz der in den Boden der vorerzeugten Gewindeausnehmung eindringenden Formkeilspitzen unterbunden oder zumindest gering gehalten, was insgesamt zu einer vollkommen oder zumindest weitestgehend symmetrischen Gewindegangausbildung führt. Der Verbreiterung der Formkeilflanken kommt somit eine (axiale) Führungsfunktion beim Vorschub des Werkzeugs in das vorerzeugte Gewinde bzw. in die vorerzeugte Gewindeausnehmung zu.

Bei dem Werkzeug handelt es sich vorzugsweise um einen Gewindefurcher mit entlang einer spiral- oder schrauben- oder helixförmig die Werkzeugachse unter der Gewindesteigung umlaufenden Formgebungskurve angeordneten Formkeilen.

Insbesondere bei einem Gewindefurcher kann der Formgebungsbereich als An- bzw. Einlaufbereich (Anfurchbereich, Anformbereich) ausgebildet sein wobei (im Formgebungsbereich) der radiale Abstand der Formkeilspitzen von der Werkzeugachse entgegen einer Vorschubrichtung des Werkzeugs zunimmt.

Die Verbreiterung ist dann insbesondere bei einem entlang der Formgebungskurve entgegen der Vorschubrichtung ersten Formkeil und/oder mehreren, vorzugsweise entlang der Formgebungskurve aufeinanderfolgenden Formkeilen vorgesehen.

Unter dem ersten Formkeil ist dabei ein im Wesentlichen vollständig ausgebildeter Formkeil zu verstehen, das heißt ein entlang der Formgebungskurve entgegen der Vorschubrichtung erster Formkeil, dessen Querschnittsform im weitesten Sinne der Querschnittsform nachfolgender Formkeile entspricht. Nicht vollständig ausgebildet sind Formkeile, die beispielsweise bei der Ausbildung einer Werkzeugfase an der Werkzeugspitze, die das Ansetzen bzw. Einfädeln des Werkzeugs an bzw. in das vorerzeugte Gewinde erleichtert, oder bei der Gratentfernung ab- bzw. angeschliffen wurden. Diese nicht vollständig ausgebildeten Formkeile sind üblicherweise am oder nahe dem in Vorschubrichtung vordersten Rand des Werkzeugs angeordnet. Derartige Formkeile sind nicht als erste Formkeile im Sinne der vorstehenden Darlegungen anzusehen. Dennoch können auch unvollständig ausgebildete Zähne durchaus einseitig, nämlich an ihrer der Vorschubrichtung abgewandten Seite, eine Verbreiterung aufweisen. Unter Berücksichtigung der unvollständigen Formkeile kann der erste Formkeil im Sinne der Erfindung daher durchaus auch der zweite oder dritte oder vierte Formkeil entlang der Formgebungskurve entgegen der Vorschubrichtung sein.

Alternativ zu einem Gewindefurcher kann auch ein Zirkulargewindeformer mit den Maßnahmen gemäß der Erfindung ausgestaltet werden und das Nachbearbeiten oder Fertigerzeugen des Gewindes dann im Zirkulargewindeformverfahren bewerkstelligt werden. Die Formkeile sind dann auf getrennten voneinander axial zur Werkzeugachse beabstandeten Formgebungsbereichen vorgesehen, die ohne Steigung senkrecht zur Werkzeugachse, vorzugsweise diese vollständig oder geschlossen oder ringförmig umgebend, verlaufen.

Ferner kann mit einem derartigen Werkzeug zwar grundsätzlich ein Außengewinde fertigerzeugt werden, es wird aber bevorzugt zur Fertigerzeugung von Innengewinden eingesetzt.

Die Verbreiterung einer Flanke lässt sich insbesondere über die Steigung der Flanke in Relation zu einer durch die Formkeilspitze gelegten, senkrecht zur Werkzeugachse orientierten Formkeilgeraden (bei symmetrischer Ausbildung die Querschnittsmittelachse des Formkeils) definieren. Ausgehend von der Formkeilspitze liegt eine Verbreiterung der Flanke ab dem Flankenpunkt vor, ab dem ein auf diesen Punkt folgender Flankenabschnitt einen größeren Betrag der Steigung aufweist als ein vor diesem Punkt liegender Flankenabschnitt. Bei Flanken, die eine Krümmung aufweisen, beginnt die Verbreiterung somit ausgehend von der Formkeilspitze ab dem Punkt, ab dem die Flanke nach außen gekrümmt ist, d.h. sich von der Formkeilgeraden und damit auch von der gegenüberliegenden Flanke wegkrümmt. Bei einer aus geradlinigen Abschnitten gebildeten Flanke beginnt die Verbreiterung ausgehend von der Formkeilspitze ab einem Knickpunkt, bei dem der Steigungsbetrag nach dem Knickpunkt größer als der Steigungsbetrag vor dem Knickpunkt ist, d.h. nach diesem Punkt entfernt sich die Flanke schneller von der Formkeilgeraden als vorher.

In einer bevorzugten Ausführungsform des Werkzeugs gemäß der Erfindung weist die Verbreiterung der Flanken bei mehreren Formkeilen, insbesondere bei allen Formkeilen mit Verbreiterung der Flanken, im Querschnitt im Wesentlichen die gleiche Form, insbesondere das gleiche Profil, und/oder die gleichen Abmessungen auf.

Zweckmäßig ist auch, wenn der Durchmesser des Formkeils in jeweils gleicher Höhe über der Werkzeugachse im Bereich der Verbreiterung bei mehreren Formkeilen, insbesondere bei allen Formkeilen mit Verbreiterung der Flanken, im Wesentlichen gleich ist.

Durch die vorstehenden Merkmale wird die Positionierung des Werkzeugs im vorerzeugten Gewinde über zahlreiche Formkeile hinweg stabilisiert. Außerdem werden Reibungsverluste und Werkzeugverschleiß aufgrund ungewünschter Druckkräfte zwischen Formkeilflanken und Ausnehmungsflanken, die bei unterschiedlichen Abmessungen entstehen können, vermieden.

Eine bevorzugte Weiterbildung des Werkzeugs gemäß der Erfindung sieht vor, dass zumindest mehrere, insbesondere alle aufeinanderfolgenden Formkeile, deren Flanken eine Verbreiterung aufweisen, in einem sich von der Formkeilspitze bis zur Verbreiterung erstreckenden Formbereich zumindest abschnittsweise, insbesondere vollständig, im Wesentlichen die gleiche Querschnittsform aufweisen.

Bevorzugt ist die Querschnittsform des Formbereichs ausgehend von der Formkeilspitze in einem ersten Abschnitt konvex gekrümmt und in einem nachfolgenden zweiten Abschnitt konkav gekrümmt. Alternativ oder additiv ist sie in einem wiederum nachfolgenden dritten Abschnitt, insbesondere in einem Übergangsbereich zur Verbreiterung, erneut konvex gekrümmt ist. Derartige Ausführungsformen sind besonders einfach herzustellen, insbesondere durch Schleifen, vorzugsweise durch Schleifscheiben.

Die Querschnittsform des Formbereichs kann ferner wenigstens annähernd eine polygonale Form aufweisen, insbesondere die Form eines Dreiecks oder eines Vierecks, vorzugsweise eines Trapezes, wobei die Ecken der polygonalen Form spitz und/oder abgerundet ausgebildet sein können. Insbesondere kann die Querschnittsform des Formbereichs ein gleichschenkliges Dreieck, vorzugsweise mit einem 60°-Innenwinkel, oder ein gleichseitiges Dreieck oder ein Dreieck mit abgerundeter und/oder abgeflachter Spitze sein. Zweckmäßig ist ferner, wenn die Flankenübergänge zwischen Formbereich und Verbreiterung zumindest teilweise abgerundet ausgebildet sind.

Dieser Formbereich sichert die eigentliche Funktionalität des Gewindefurchers, das Fertigfurchen eines vorerzeugten Gewindes. Dabei kann ― wie dargelegt ― auf unterschiedlichste Formgebungen zurückgegriffen werden.

Bei einer besonders vorteilhaften Ausführungsform der Erfindung nehmen die Abmessungen der Querschnittsform des Formbereichs, insbesondere des Querschnittsprofils des Formbereichs, bei, insbesondere entlang der Formgebungskurve, entgegen der Vorschubrichtung aufeinanderfolgenden Formkeilen zu. Dabei können abschnittsweise aufeinanderfolgende Formkeile durchaus auch identische Abmessungen aufweisen, solange insgesamt im Formbereich die Abmessungen zunehmen. Bevorzugt ist allerdings, dass die Abmessungen kontinuierlich, vorzugsweise linear, zunehmen. Damit wird - bei vergleichbarer Form des Querschnittsprofils - eine Profilabstufung bezüglich des Formbereichs der aufeinanderfolgenden Formkeile ausgebildet. Auf diese Weise wird das zu erzeugende Gewinde Schritt für Schritt durch die Formkeile, insbesondere die Formbereiche der Formkeile, ausgehend vom vorerzeugten Gewinde erzeugt. Die sich durch das Furchen ergebenden Belastungen werden nahezu gleichmäßig auf die furchaktiven Formkeile verteilt.

Bei einer Weiterbildung des Werkzeugs gemäß der Erfindung weisen die Flanken zumindest mehrerer, insbesondere aller aufeinanderfolgender Formkeile entlang der Formgebungskurve, eine Konizität auf, das heißt, insbesondere entlang der Formgebungskurve, sind die jeweils entsprechenden Flankenpunkte der Formkeile auf einer Kegelmantelfläche angeordnet. Der Konizitätswinkel, das heißt der Winkel einer in der Kegelmantelfläche liegenden Gerade zur Kegelachse, kann dabei für verschiedenen Flankenpunkte verschieden sein, insbesondere im Formbereich (20), vorzugsweise an der Formkeilspitze (8), zwischen 5° und 20°, vorzugsweise zwischen 8° und 16° liegen und/oder im Bereich der Verbreiterung (19) zwischen 0° und 2°, vorzugsweise bei etwa 1°, liegen.

Zweckmäßig und vorteilhaft ist auch, wenn zumindest der Formgebungsbereich einen Werkzeugkern aufweist, der sich entlang der Werkzeugachse erstreckt. Der Werkzeugkern kann zumindest abschnittsweise entlang der Werkzeugachse eine Konizität aufweisen, das heißt eine konische Außenform. Bevorzugt sollte der Werkzeugkern entlang der Werkzeugachse jedoch einen konstanten Durchmesser aufweisen. An der Außenfläche des Werkzeugkerns sollten die Formkeile angeordnet sein. Um das schrittweise Furchen des fertigen Gewindes aus dem vorerzeugten Gewinde zu verwirklichen, sollte ferner die Höhe der Formkeile über dem Werkzeugkern, insbesondere entlang der Formgebungskurve, entgegen der Vorschubrichtung des Werkzeugs zunehmen.

Bei einer besonders bevorzugten und vorteilhaften Ausführungsform des Werkzeugs gemäß der Erfindung ist die Verbreiterung der Flanken als Sockel des Formkeiles ausgebildet. Unter Sockel ist dabei zu verstehen, dass ein der Formkeilspitze gegenüberliegender Basisbereich des Formkeils als Verbreiterung ausgebildet ist. Zu einem Werkzeugkern hin schließt der Formkeil bei einer Sockelausbildung der Verbreiterung mit einer Verbreiterung ab. Der Formkeil umfasst dann einen Formbereich, der die Formkeilspitze umfasst, und einen Verbreiterungsbereich, der die Formkeilbasis umfasst. Vorzugsweise gehen beide Bereiche kontinuierlich oder abrupt ohne weitere Zwischenbereiche ineinander über.

Gemäß einer zweckmäßigen Weiterbildung ist vorgesehen, dass die Verbreiterungen der Formkeile beim Vorschub in das vorerzeugte Gewinde in Ausnehmungen des vorerzeugten Gewindes eingreifen zur Positionierung, insbesondere Zentrierung, des Formkeils in der Ausnehmung des vorerzeugten Gewindes. In diesem Fall vermindern die Verbreiterungen den Abstand zwischen Formkeil und vorerzeugter Gewindeausnehmung, wodurch der Positionierungs-Freiheitsgrad der Formkeile in der Ausnehmung eingeschränkt und damit eine unerwünschte axial verschobene Positionierung unterbunden oder zumindest reduziert wird. Den Formkeilen, insbesondere ihren Verbreiterungen, kommt somit eine axiale Führungsfunktion bezüglich der Werkzeuganordnung im vorerzeugten Gewinde zu.

Zweckmäßig und vorteilhaft ist auch, wenn zumindest die Formkeilspitze bei mindestens einem Formkeil beim Vorschub in das vorerzeugte Gewinde in einen Bodenabschnitt der Ausnehmung des vorerzeugten Gewindes eindringt. Dadurch wird das Material des Werkstücks, in das das Gewinde eingebracht wird, kaltverformt. Auf diese Weise wird die eigentliche Furchfunktion des Formkeils und damit des Werkzeugs verwirklicht. Der Formkeil kombiniert somit die axiale Führungsfunktion durch seine Verbreiterungen mit der Furchfunktion durch seine Formkeilspitze und/oder daran angrenzende Flankenabschnitte. Mit anderen Worten erfüllt der Verbreiterungsbereich des Formkeils die axiale Führungsfunktion und der Formbereich des Formkeils erfüllt die Furchfunktion.

Gemäß einer vorteilhaften Weiterbildung kann auch vorgesehen sein, dass der Formgebungsbereich, insbesondere auf seiner in Vorschubrichtung angeordneten Seite, einen Einführungsbereich aufweist mit einem oder mehreren, insbesondere aufeinanderfolgenden, Formkeilen mit Verbreiterung der Flanken, deren Formkeilspitzen beim Vorschub in das vorerzeugte Gewinde nicht in einen Bodenabschnitt der Ausnehmung des vorerzeugten Gewindes eindringen. Mit anderen Worten ist den furchenden Formkeilen in Vorschubrichtung ein Einführungsbereich vorgelagert. Die Formkeile des Einführbereichs erfüllen nur die axiale Führungsfunktion, leisten jedoch keinen Beitrag zur Weitererzeugung des Gewindes. Allerdings stellen sie die möglichst exakte Positionierung der nachfolgenden Formkeile mit Furchfunktion sicher. Bei diesen kann dann auf Führungsmerkmale verzichtet werden, so dass die an diesen Furchkeilen wirksamen Kräfte (nahezu) vollständig für das Furchen zur Verfügung stehen. Ergänzend kann vorgesehen sein, dass der Einführungsbereich den oben genannten, entlang der Formgebungskurve entgegen der Vorschubrichtung ersten Formkeil umfasst.

Gemäß einer Ausbildungsform des Werkzeugs ist vorgesehen, dass der Durchmesser des Formkeils zumindest in einem Teilbereich der Verbreiterung mindestens 90 %, insbesondere 95 %, vorzugsweise etwa 99 % des Durchmessers der Ausnehmung des vorerzeugten Gewindes in entsprechender Höhe über der Werkzeugachse des eingeführten Werkzeugs beträgt. Theoretisch könnte der Formkeildurchmesser im Wesentlichen auch gleich dem Durchmesser der Ausnehmung des vorerzeugten Gewindes in entsprechender Höhe über der Werkzeugachse des eingeführten Werkzeugs sein. Dies würde allerdings das Einführen (Einfädeln) des Werkzeugs in das vorerzeugte Gewinde erschweren. Eine geringfügige Differenz hilft hingegen durch Bereitstellen eines entsprechenden Spiels beim Einführen.

Auch kann es zweckmäßig sein, wenn der Durchmesser des Formkeils in einem sich von der Formkeilspitze bis zur Verbreiterung erstreckenden Formbereich, soweit er nicht in den Bodenabschnitt der Ausnehmung des vorerzeugten Gewindes eindringt, weniger als 90 %, insbesondere weniger als 85 %, vorzugsweise weniger als 80 %, des Durchmessers der Ausnehmung des vorerzeugten Gewindes in entsprechender Höhe über der Werkzeugachse (A) des eingeführten Werkzeugs beträgt. Auf diese Weise steht bei jedem Formkeil ausreichend freies Volumen zur Aufnahme des durch das Furchen verdrängten Materialvolumens zur Verfügung. Das verdrängte Material kann im Wesentlichen radial Richtung Werkzeugachse fließen.

Vorteilhaft ist auch, wenn die Differenz zwischen Ausnehmungsdurchmesser und entsprechendem Formkeildurchmesser im Bereich der Verbreiterung kleiner ist als im Formbereich, insbesondere mindestens 10 % kleiner, vorzugsweise mindestens oder etwa 25 % kleiner.

Die vorgenannten Ausbildungen sehen insbesondere vor, dass die Abmessungen, insbesondere der Durchmesser des Formkeils, im Formbereich des Formkeils in etwa den Abmessungen eines vergleichbaren Formkeils gemäß dem Stand der Technik entsprechen, wohingegen die Abmessungen, insbesondere der Durchmesser des Formkeils, im Verbreiterungsbereich des Formkeils deutlich breiter als bei vergleichbaren Formkeilen gemäß dem Stand der Technik ausfällt.

Gemäß einer Weiterbildung nehmen die Durchmesser der entlang der Formgebungskurve angeordneten Formkeile entgegen einer Vorschubrichtung des Werkzeugs in einem sich von der Formkeilspitze bis zur Verbreiterung erstreckenden Formbereich zu, wobei die Zunahme insbesondere in Relation zur Zunahme des radialen Abstands der Formkeilspitzen von der Werkzeugachse steht. Diese Relation kann eine nichtlineare Abhängigkeit sein, vorzugsweise handelt es sich aber um eine linearer Abhängigkeit.

Auch kann vorgesehen sein, dass der, insbesondere entlang der Formgebungskurve, entgegen der Vorschubrichtung letzte Formkeil des Formgebungsbereichs keine Verbreiterung der Flanken aufweist und seine Querschnittsform und/oder seine Querschnittsabmessungen im Wesentlichen der Querschnittsform und/oder den Querschnittsabmessungen der fertigerzeugten Gewindeausnehmung entsprechen. Damit ist das Gewinde nach dem Durchgang dieses letzten Formkeils des Formgebungsbereichs im Wesentlichen fertiggestellt.

Bei einer besonders vorteilhaften und bevorzugten Ausführungsform des Werkzeugs gemäß der Erfindung folgt entgegen der Vorschubrichtung auf den Formgebungsbereich ein Kalibrierbereich (Egalisierbereich) mit, vorzugsweise entlang einer um die Werkzeugachse spiralförmig oder schraubenförmig oder helixförmig umlaufenden Kurve (oder: Gewindegang), aufeinanderfolgend angeordneten Formkeilen. Insbesondere grenzt der Kalibrierbereich direkt an den Formgebungsbereich an, wobei vorzugsweise die Formgebungskurve des Formgebungsbereichs kontinuierlich in die Kurve des Kalibrierbereichs übergeht und beide Kurven die gleiche Steigung entlang der Werkzeugachse aufweisen. Während der Formgebungsbereich überwiegend der Formgebung des Gewindes dient, ist der Kalibrierbereich vornehmlich zum kalibrieren und glätten des Gewindes vorgesehen. Dadurch wird das Gewinde besonders exakt gefertigt. Ferner dient der Kalibrierbereich der Führung des Werkzeugs in dem Gewinde. Diese Führungsfunktion des Kalibrierbereichs kann allerdings bei Vorsehen des bereits angesprochenen Einführbereichs entfallen.

Gemäß einer zweckmäßigen Weiterbildung hierzu ist vorgesehen, dass der radiale Abstand der Formkeilspitzen von der Werkzeugachse im Kalibrierbereich im Wesentlichen gleich ist oder entgegen der Vorschubrichtung abnimmt, und vorzugsweise, insbesondere am Übergang zum Formgebungsbereich, dem größten radialen Abstand der Formkeilspitzen der Formkeile des Formgebungsbereichs entspricht. Auch kann vorgesehen sein, dass die Querschnittsform und/oder die Querschnittsabmessungen der Formkeile im Kalibrierbereich im Wesentlichen gleich sind und insbesondere im Wesentlichen der Querschnittsform und/oder den Querschnittsabmessungen der fertigerzeugten Gewindeausnehmung entsprechen.

Bevorzugt weisen wenigstens der Formgebungsbereich und/oder der Kalibrierbereich in ihrem Querschnitt senkrecht zur Werkzeugachse annähernd eine polygonale Form auf, vorzugsweise mit einer Eckenzahl e von drei oder vier oder fünf oder sechs oder sieben. Ergänzend können alle jeweils e-ten der unmittelbar aufeinanderfolgenden Formkeilspitzen in einer Ebene angeordnet sein, wobei diese Ebene die Werkzeugachse enthält. Alternativ können die jeweils e-ten Formkeilspitzen jedoch auch umlaufend um die Werkzeugachse angeordnet sein, insbesondere spiralförmig oder schraubenförmig oder helixförmig umlaufend.

Ferner sind die jeweils e-ten Formkeilspitzen bevorzugt auf einer Formkeilspitzenachse angeordnet, die im Formgebungsbereich um einen vorgegeben Winkel zur Werkzeugachse geneigt ist und im Kalibrierbereich parallel zur Werkzeugachse verläuft.

Bei einer zweckmäßigen und bevorzugten Ausführungsform des Werkzeugs gemäß der Erfindung folgt entgegen der Vorschubrichtung des Werkzeugs auf Formgebungsbereich und/oder Kalibrierbereich ein Werkzeugschaft zum Befestigen des Werkzeugs in einer Gewindeerzeugungseinrichtung (Werkzeugmaschine).

Das Werkzeug besteht zweckmäßigerweise im Wesentlich aus Schnellstahl und/oder Hartmetall und ist vorzugsweise - insbesondere bei Werkzeugen für anspruchsvolle Anwendungen - von einer harten und verschleißfesten Verschleißschutzschicht überzogen.

Gemäß Anspruch 22 sieht das erfindungsgemäße Verfahren zur Herstellung eines Werkzeugs, das den vorstehenden Ausführungen entspricht, vor, dass die Formkeile zumindest teilweise durch Schleifen erzeugt werden, insbesondere mittels Schleifscheiben. Dabei wird bei allen Formkeilen von einer einheitlichen Grundform ausgegangen, einem Formkeil-Rohling, der insbesondere auf einem Werkzeugkern angeordnet ist. Mittels Schleifen wird dieser Rohling dann auf die gewünschte Form gebracht. Besonders einfach lassen sich auf diese Weise Formkeilprofile mit abgerundetem Profil im Formbereich und einem Sockel als Verbreiterung herstellen. Einfach herstellbar sind auf diese Weise auch Formkeile mit im Wesentlichen identischer Profilform, die lediglich radial versetzt ist, das heißt die bereits angesprochenen aufeinanderfolgenden Formkeile mit Profilabstufung.

Gemäß Anspruch 23 sieht das erfindungsgemäße Verfahren zum Erzeugen eines Gewindes in einem Werkstück, insbesondere eines Innengewindes, vor,
a) dass im oder am Werkstück ein Gewinde vorerzeugt wird, insbesondere spanend oder spanlos, vorzugsweise durch Bohren und/oder Fräsen und/oder Drehen und/oder Schleifen und/oder Wickeln und/oder Furchen, und
b) dass die Fertigerzeugung des Gewindes spanlos erfolgt unter Verwendung eines Werkzeugs, insbesondere eines Gewindefurchers, vorzugsweise entsprechend den vorstehenden Ausführungen, mit mindestens einem Formkeil, der im Querschnitt zwei Flanken aufweist, wobei der Formkeil im vorerzeugten Gewinde positioniert, insbesondere zentriert, wird durch zumindest eine Verbreiterung mindestens einer seiner Flanken.

Die Vorteile dieses Verfahrens ergeben sich aus den vorstehenden Ausführungen, insbesondere aus den allgemeinen Darlegungen zum Gewindefurchen in vorerzeugten Gewinden und aus der Erläuterung der Vorteile des vorbeschriebenen erfindungsgemäßen Werkzeugs.

Bei der Fertigerzeugung des Gewindes gemäß dem vorstehenden Verfahren wird das Werkzeug somit über einen oder mehrere Formkeile relativ zum vorerzeugten Gewinde, d.h. insbesondere der Ausnehmung des vorerzeugten Gewindes, positioniert. Dazu greift der Formkeil in die vorerzeugte Gewindeausnehmung ein. Sein Positionierfreiheitsgrad ist dabei durch den Abstand seiner Flanken von Seiten bzw. Flanken der vorerzeugten Gewindeausnehmung bestimmt. In der Regel wird eine der Flanken des Formkeils an einer Flanke der Ausnehmung anliegen bzw. entlang gleiten und dadurch den Formkeil und damit das gesamte Werkzeug relativ zur vorerzeugten Gewindeausnehmung bzw. dem vorerzeugten Gewinde positionieren. Um eine möglicht zentrierte Positionierung des Formkeils in der Ausnehmung zu erreichen, sollte gemäß der Erfindung der Formkeildurchmesser im Vergleich zum Ausnehmungsdurchmesser in gleicher Höhe über einer Werkzeugmittelachse zumindest abschnittsweise kaum oder zumindest nicht viel kleiner sein, vorzugsweise sollte der Durchmesser des Formkeils zumindest in einem Teilbereich mindestens 90 %, insbesondere 95 %, vorzugsweise etwa 99 % des Durchmessers der Ausnehmung des vorerzeugten Gewindes betragen.

Dabei kann dieses Relation auch über die gesamte Formkeilhöhe erfüllt sein, es reicht aber auch eine abschnittsweise Verwirklichung in Form einer Verbreiterung zumindest einer der Formkeilflanken zur Reduzierung des Formkeilspiels in der Ausnehmung. Insbesondere sollte die Profilabstufung aufeinanderfolgender Formkeile derart ausgebildet sein, dass auch die für die Positionierung verantwortlichen vordersten Formkeile möglichst wenig Spiel innerhalb der Ausnehmung haben, das heißt auch der Durchmesser dieser Positionierformkeile zumindest abschnittsweise - wie oben beschrieben - kaum vom Ausnehmungsdurchmesser abweicht.

Zweckmäßigerweise umfasst die Vorerzeugung folgende Schritte:
a) Erzeugung einer zylindrischen Vorbohrung.
b) Bohren des vorerzeugten Gewindes mit einem Gewindebohrer, wobei der Außendurchmesser des vorerzeugten Gewindes kleiner als der Außendurchmesser des fertigerzeugten Gewindes ist.

Bevorzugt umfasst die Fertigerzeugung des Gewindes folgende Schritte:
a) Wenigstens ein Formgebungsbereich des Werkzeugs wird um eine Werkzeugachse gedreht.
b) Der Formgebungsbereich mit entlang einer die Werkzeugachse (A) spiralförmig oder schraubenförmig umlaufenden Formgebungskurve aufeinanderfolgend angeordneten Formkeilen wird in eine Vorschubrichtung bewegt.
c) Die Formkeile greifen während der Bewegung in Vorschubrichtung in das vorerzeugte Gewinde ein, insbesondere werden zumindest einige der Formkeile in eine Werkstückoberfläche im Bereich des vorerzeugten Gewindes eingedrückt zur Weitererzeugung oder Fertigerzeugung des Gewindes.

Anstelle dieses Gewindefurchverfahrens kann auch ein Zirkulargewindeformverfahren gemäß Anspruch 26 zum Einsatz kommen.

Als weitere Schritt bei der Fertigerzeugung des Gewindes kann vorgesehen sein, dass Formkeile eines entgegen der Vorschubrichtung an den Formgebungsbereich angrenzenden Kalibrierbereichs das erzeugte Gewinde glätten und/oder kalibrieren.

Alternativ oder additiv kann das Verfahren zur Fertigerzeugung des Gewindes auch vorsehen, dass Formkeile, insbesondere mit einer Verbreiterung der Flanken, eines an der der Vorschubrichtung des Werkzeugs zugewandten Seite des Formgebungsbereichs angeordneten Einführbereichs während der Bewegung in Vorschubrichtung in das vorerzeugte Gewinde eingreifen, aber nicht in eine Werkstückoberfläche im Bereich des vorerzeugten Gewindes eingedrückt werden. Diese Formkeile bilden dann den bereits erwähnten Einführbereich, sie übernehmen die axiale Führungsfunktion.

Die Erfindung wird nachfolgend anhand von Ausführungsbeispielen und unter Bezugnahme auf die beiliegenden Zeichnungen weiter erläutert. Es zeigen jeweils:
- FIG 1: eine perspektivische Ansicht eines an sich bekannten Gewindefurchers,
- FIG 2: schematisch im Querschnitt die Profilabstufung aufeinanderfolgender Formkeile bei einem Gewindefurcher gemäß dem Stand der Technik,
- FIG 3: in schematischer Darstellung die Anordnung eines Formkeilprofils gemäß Stand der Technik in einer vorerzeugten Gewindeausnehmung und die sich ergebenden Abstände,
- FIG 4 bis FIG 8 s: chematisch im Querschnitt die Profilabstufungen aufeinanderfolgender Formkeile bei verschiedenen Ausführungsbeispielen von Gewindefurchern gemäß der Erfindung,
- FIG 9: eine seitliche Draufsicht auf einen Teil eines Ausführungsbeispiels eines Gewindefurchers gemäß der Erfindung mit Formkeilprofilen gemäß FIG 4,
- FIG 10: schematisch eine dreidimensionale Teilansicht des Ausführungsbeispiels gemäß FIG 9, und
- FIG 11: schematisch eine seitliche Draufsicht auf die gesamte Ausführungsform des Werkzeugs gemäß FIG 9.
Einander entsprechende Teile und Größen sind in den FIG 1 bis FIG 11 mit den gleichen Bezugszeichen versehen.

FIG 1 zeigt einen an sich bekannten Gewindefurcher 1 der einen Werkzeugschaft 2 und zwei Arbeitsbereiche, nämlich einen Formgebungsbereich 3 und einen Kalibrierbereich 4 umfasst. Eine Werkzeugachse A, die gleichzeitig eine Drehachse des Gewindefurchers 1 darstellt, verläuft parallel zur Längserstreckung des Gewindefurchers 1 durch die Mitte des Gewindefurchers 1. Eine Vorschubrichtung V des Gewindefurchers 1 verläuft parallel zur Werkzeugachse A und ist in FIG 1 durch die Pfeilrichtung angegeben. Der Gewindefurcher 1 dient zur spanlosen Innengewindeherstellung, ohne dass hierzu eine Vorerzeugung des Gewindes erforderlich ist. Der prinzipielle Aufbau dieses bekannten Gewindefurchers stimmt jedoch mit dem prinzipiellen Aufbau eines für die Fertigbearbeitung eines vorerzeugten Gewindes bestimmten Gewindefurchers überein.

Der Werkzeugschaft 2 kann beispielsweise zylindrisch ausgeführt sein und trägt in der Regel an der im Spannfutter eingebrachten Seite einen Vierkant (hier nicht dargestellt) zur Furchmomentübertragung. Der Werkzeugschaft 2 ist hier fest mit dem angrenzenden Kalibrierbereich 4 verbunden, insbesondere sind der Werkzeugschaft 2 und die Arbeitsbereiche 3, 4 einstückig ausgeführt sind. Die Arbeitsbereiche 3, 4 weisen einen polygonalen Querschnitt senkrecht zur Werkzeugachse A auf, der annähernd die Form eines Dreiecks besitzt.

Im Formgebungsbereich 3 und im Kalibrierbereich 4 ist an einem Werkzeugkern 5, der ebenfalls einen annähernd dreieckigen Querschnitt aufweist, ein Formgebungsgewinde mit Formkeilen 7 (Drückstollen) entlang einer Formgebungskurve 6 ausgebildet. Die Formgebungskurve 6 läuft spiralförmig bzw. schraubenförmig, d.h. mit Steigung, um den Werkzeugkern 5. Die Formkeile 7 weisen an ihrem freien äußeren Ende jeweils eine Formkeilspitze 8 (Formkeilkopf) auf. Die Formkeile 7 sind entlang der Formgebungskurve 6 und damit aufgrund der Steigung der Formgebungskurve 6 axial entlang der Werkzeugachse A versetzt auf den Ecken des polygonalen Werkzeugkerns 5 angeordnet.

Jeder Gewindegang des Formgebungsgewindes bzw. der Formgebungskurve 6, also jede Windung um den Werkzeugkern 5, umfasst im dargestellten Fall drei Formkeile 7. Alle jeweils dritten Formkeile 7 der entlang des Formgebungsgewindes unmittelbar aufeinanderfolgenden Formkeile 7 sind mit ihrer Formkeilspitze 8 in einer Ebene angeordnet, die auch die Werkzeugachse A enthält. Der radiale Abstand der Formkeilspitzen 8 von der Werkzeugachse A nimmt im Formgebungsbereich 3 entgegen der Vorschubrichtung V des Gewindefurchers 1 zu.

Wird nun der Gewindefurcher 1 in Vorschubrichtung V in eine Bohrung eingeführt, so bilden die Formkeile 7 des Formgebungsbereichs 3 ein Gewinde in der Innenwand der Bohrung aus. Dabei dringen die entlang der Formgebungskurve 6 aufeinanderfolgenden Formkeile 7 in die Werkstückoberfläche ein, bis ein letzter Formkeil 7 des Formgebungsbereichs 3 das Gewinde in seiner vollen Tiefe und Breite ausformt.

Bei weiterer rotierender Bewegung des Gewindefurchers 1 in Vorschubrichtung V kalibrieren und glätten die nachfolgenden Formkeile 7 des Kalibrierbereichs 4 das erzeugte Gewinde (die Gewindegänge bzw. Gewinderillen). Die Formkeile 7 im Kalibrierbereich 4 sind deshalb in ihren Abmessungen und in ihrer Form genau auf das zu erzeugende Gewinde abgestimmt. Die an den Formgebungsbereich 3 angrenzenden Formkeile 7 des Kalibrierbereichs 4 entsprechen in der Regel in der Querschnittsform und in den Abmessungen dem oder den angrenzenden Formkeile 7 des Formgebungsbereichs 3. Entgegen der Vorschubrichtung V kann dann im Kalibrierbereich 4 der radiale Abstand der Formkeilspitzen 8 von der Werkzeugachse A um einen geringen Betrag abnehmen (aus FIG 1 nicht ersichtlich), um die Reibung im erzeugten Gewinde zu verringern und eine im Normalfall auftretende elastische Verformung des Werkstoffes zu kompensieren. Durch die Spannungen im Werkstoff, die aus der elastischen Verformung resultieren, würde sonst ein Druck auf die Formkeile 7 des Kalibrierbereichs 4 wirken, der die Reibung bei der Vorschubbewegung zusätzlich erhöht.

FIG 2 zeigt schematisch im Querschnitt die Profilabstufung aufeinanderfolgender Formkeile 7 bei einem Gewindefurcher gemäß dem Stand der Technik. Zu erkennen ist im Querschnittsprofil ein vorerzeugte Gewinde 9 und eine vorerzeugte Gewindeausnehmung 11 mit Flanken 13. In diese vorerzeugte Gewindeausnehmung 11 greifen nacheinander beim Werkzeugvorschub die Formkeile 7 des Gewindefurchers ein. Das Profil dieser Formkeile 7 in Relation zum vorerzeugten Gewinde 9 ist schematisch in FIG 2 dargestellt. Zu erkennen sind jeweils die Formkeilspitze 8 und zwei seitliche Formkeilflanken 10. Entgegen der Vorschubrichtung des Werkzeugs nimmt der radiale Abstand der Formkeilspitze 8 von der Werkzeugachse A zu. Dies findet in FIG 2 seinen Niederschlag in den übereinander dargestellten Formkeilprofilen 7 der eigentlich entlang der Formgebungskurve 6 nacheinander angeordneten Formkeile 7. FIG 2 zeigt somit die Profilabstufung der nacheinander angeordneten Formkeile 7. Aus FIG 2 ergibt sich, dass gemäß dem Stand der Technik die Vergrößerung der Höhe der Formkeilspitz 8 über der Werkzeugachse A verwirklicht ist durch entsprechendes radiales Verschieben des jeweiligen Formkeilprofils 7. Die Formkeilprofile 7 der nacheinander entlang der Formgebungskurve 6 angeordneten Formkeile 7 sind identisch ausgebildet, sie sind lediglich radial zur Werkzeugachse, das heißt in FIG 2 in senkrechter Richtung, verschoben. Ein erster Formkeil 7a (unterstes Formkeilprofil in FIG 2) greift zwar in die vorerzeugte Gewindeausnehmung 11 ein, drückt jedoch noch nicht in den Boden 12 der vorerzeugten Gewindeausnehmung 11. Alle weiteren Formkeile 7 drücken jedoch in den Boden 12 der Gewindeausnehmung 11 und tragen damit zur Weiter- bzw. Fertigerzeugung des Gewindes bei.

Aus FIG 2 ist ersichtlich, dass der erste Formkeil 7a bezüglich seiner Anordnung in der vorerzeugten Gewindeausnehmung 11 einen gewissen Freiheitsgrad parallel zur Werkzeugachse A, d.h. in axialer Richtung und in FIG 2 in waagrechter Richtung, hat. Dies ergibt sich daraus, dass das erste Formkeilprofil 7a in jeweils gleicher Höhe über der Werkzeugachse A (in FIG 2 nicht dargestellt) einen kleineren Querschnittsdurchmesser aufweist als die vorerzeugte Gewindeausnehmung 11. Dies führt in der Praxis dazu, dass die Formkeile 7 nicht - wie für eine optimale Gewindefertigerzeugung erforderlich - mittig in den Boden 12 der vorerzeugten Gewindeausnehmung 11 drücken, sondern seitlich versetzt.

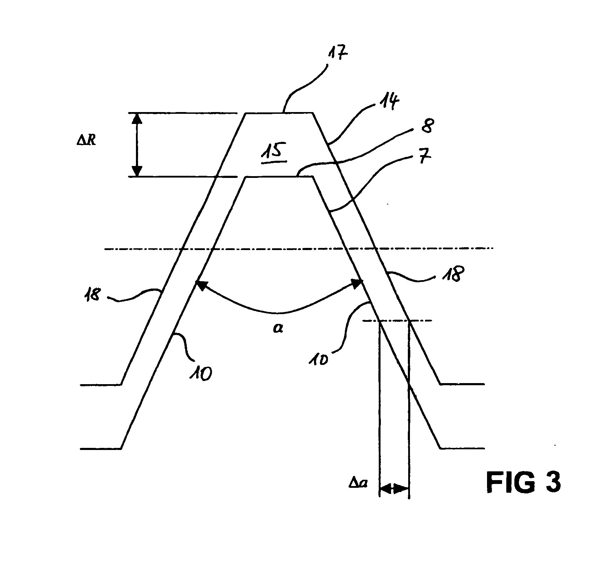

FIG 3 zeigt in schematischer Darstellung die Anordnung eines Formkeilprofils 7 gemäß Stand der Technik in Relation zu einer (zu erzeugenden) fertigerzeugten Gewindeausnehmung 15 und die sich ergebenden Abstände. Mit ΔR ist dabei der Abstand der Formkeilspitze 8 vom Boden 17 der fertigerzeugten Gewindeausnehmung 15 bezeichnet und mit Δa der Abstand der Formkeilflanke 10 von der jeweils zugewandten Flanke 18 der fertigerzeugten Gewindeausnehmung 15, gemessen parallel zur Werkzeugachse A (in FIG 3 nicht dargestellt, aber orientierungsmäßig symbolisiert durch die beiden strichpunktierten Linien), wobei von einer mittigen Anordnung des Formkeils 7 in der fertigerzeugten Gewindeausnehmung 15 ausgegangen wird. Zwischen den beiden Formkeilflanken 10 ist ein Winkel α ausgebildet, der im dargestellten Beispiel etwa 50° beträgt, wobei auch andere Winkel möglich sind. Beispielsweise beträgt der Winkel α für die Fertigerzeugung eines metrischen Gewindes 60°. In dem dargestellten Ausführungsbeispiel verlaufen ferner die Flanken 18 der fertigerzeugten Gewindeausnehmung 15 parallel zu den jeweilig zugewandten Formkeilflanken 10.

Bei einer auf dem Ausführungsbeispiel gemäß FIG 3 aufbauenden Profilabstufung, die sich vergleichbar auch bei anderen Profilformen angeben lässt, ändert sich mit geringer werdendem Abstand ΔR auch der Abstand Δa, wobei folgender linearer Zusammenhang besteht: Δa = ΔR · tan (α/2). Je näher eine Formkeilspitze 8 somit einer zu erzielenden Gewindetiefe kommt, das heißt je kleiner ΔR, desto kleiner wird auch der Abstand Δa zwischen den Flanken 10, 18.

Entspricht nun ein vorerzeugtes Gewinde 9 in seinen Abmessungen parallel zur Werkzeugachse, das heißt in seinen axialen Abmessungen im Wesentlichen bereits einem zu erzeugenden fertigerzeugten Gewinde 14 und unterscheidet sich im Wesentlichen nur in der Ausnehmungstiefe, das heißt in seinen radialen Abmessungen vom zu erzeugenden fertigerzeugten Gewinde 14, so entspricht in dem Bereich des Formkeils 7, der nicht in den Boden 12 des vorerzeugten Gewinde 11 eindringt, der Abstand der Formkeilflanke 10 von der jeweils zugewandten Flanke 13 der vorerzeugten Gewindeausnehmung 11 (in FIG 3 nicht dargestellt), gemessen parallel zur Werkzeugachse A und somit in den Figuren jeweils waagrecht, im Wesentlichen dem Abstand Δa zwischen Formkeilflanke 10 und Flanke 18 der fertigerzeugten Gewindeausnehmung 15, wobei auch hier von einer mittigen Anordnung des Formkeils 7 in der vorerzeugten Gewindeausnehmung 11 ausgegangen wird. Demnach wird nachfolgend auch der Abstand zwischen Formkeilflanke 10 und zugewandter Flanke 13 der vorerzeugten Gewindeausnehmung 11 mit Δa bezeichnet. Der Abstand Δa bestimmt auch den axialen Freiheitsgrand der Positionierung des Formkeils 7 in der vorerzeugte Gewindeausnehmung 11, und zwar beträgt diese Freiheitsgrad 2 Δa, das heißt zweimal den Abstand Δa. Dies bedeutet, ausgehend von einer mittigen Position des Formkeils 7 kann die tatsächliche Position des Formkeils 7 um Δa in Vorschubrichtung und um Δa entgegen der Vorschubrichtung des Werkzeugs abweichen.

Bei gemäß der Erfindung ausgebildeten Gewindefurchern umfassen diese nunmehr Formkeile 7, die eine Verbreiterung 19 an zumindest einer ihrer Flanken 10 aufweisen. Sinn dieser Verbreiterung 19 ist die Reduzierung des vorgenannten axialen Freiheitsgrades der Positionierung des Formkeils 7 in einer vorerzeugten Gewindeausnehmung 11. Dabei soll allerdings die für das Fertigerzeugen des Gewindes sinnvolle Profilabstufung der Formkeile 7 im Formgebungsbereich 3 erhalten bleiben. Deshalb erfolgt die Verbreiterung 19 der Formkeile 7 in einem Formkeilbereich, der nicht in den Boden 12 des vorerzeugten Gewinde 11 eindringt.

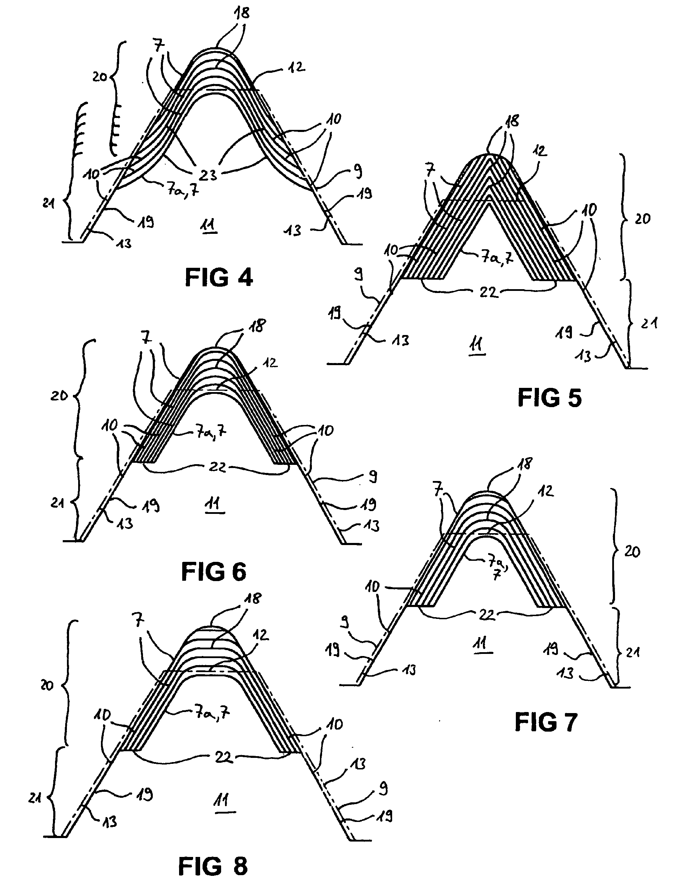

FIG 4 bis FIG 8 zeigen schematisch im Querschnitt verschiedene Ausführungsformen von Profilabstufungen aufeinanderfolgender Formkeile 7, wie sie bei verschiedenen Ausführungsbeispielen von Gewindefurchern gemäß der Erfindung ausgebildet sein können. Dargestellt ist jeweils mit strichpunktierter Linie das vorerzeugte Gewinde 9 sowie die vorerzeugte Gewindeausnehmung 11. Die Formkeile 7 weisen jeweils an ihrer Basis eine Verbreiterung 19 auf, die somit als Sockel ausgebildet ist. Das Formkeilprofil 7 unterteilt sich in einen Formbereich 20 um die Formkeilspitze 8 und in einen Verbreiterungsbereich 21 an der der Formkeilspitze 8 gegenüberliegenden Formkeilbasis. Der Übergang zwischen Formbereich 20 und Verbreiterungsbereich 21 ist bei den Ausführungsformen gemäß FIG 5 bis 8 durch einen parallel zur Werkzeugachse ausgebildeten Profilabsatz 22 gebildet. Bei der Ausführungsform gemäß FIG 4 ist der Übergang gerundet ausgebildet. Als Übergangspunkt 23 kann hier die Profilstelle angesehen werden, ab der die Profilkurve bzw. Formkeilflanke 10 ausgehend von der Formkeilspitze 8 aus einem nahezu geradlinigen Verlauf in eine Krümmung nach außen, das heißt von der anderen Formkeilflanke 10 weg, übergeht.

Aus FIG 4 bis 8 ist ersichtlich, dass die Verbreiterung 19 jeweils für alle hintereinander entlang der Formgebungskurve angeordneten Formkeile 7 im Wesentlichen identisch ausgebildet ist (in FIG 4 trifft dies allerdings auf den gekrümmten Übergangsbereich zum Formbereich 20 nicht zu), insbesondere zumindest abschnittsweise den gleichen Durchmesser in jeweils gleicher Höhe aufweist. Die Profilabstufung erfolgt im Wesentlichen im Formbereich 20 der Formkeile 7, und zwar dort analog zur anhand von FIG 2 erläuterten Profilabstufung gemäß Stand der Technik.

Der entscheidende Unterschied der Erfindung zum Stand der Technik ist demnach die Verbreiterung 19 der Formkeile 7. Dadurch wird der Abstand Δa_{Verbreiterung} zwischen der Formkeilflanke 10 und der zugewandten Flanke 13 der vorerzeugten Gewindeausnehmung 11 im Bereich der Verbreiterung 19, gemessen parallel zur Werkzeugachse A und damit waagrecht in den Figuren, zumindest abschnittsweise reduziert und damit der axiale Freiheitsgrad der Positionierung des Formkeils 7 in der vorerzeugten Gewindeausnehmung 11 verringert. Die Verbreiterung sichert daher die wunschgemäße Positionierung des Formkeils 7. Um Reibungsprobleme und Einführprobleme zu vermeiden, wird jedoch nicht Δa_{Verbreiterung} = 0 gewählt, vielmehr gilt (in etwa) Δa_{Verbreiterung} = 0,75 · Δa_{(ohne Verbreiterung}), das heißt die Verbreiterung reduziert den Abstand um etwa 25%.

FIG 4 bis 8 zeigen weiter, dass der jeweils erste Formkeil 7a nicht in den Boden 12 der vorerzeugten Gewindeausnehmung 11 eindringt. Formkeil 7a leistet daher keine Furcharbeit, er sorgt mit seiner Verbreiterung 19 lediglich für die gewünschte Positionierung, insbesondere Zentrierung, des Formkeils 7a in der vorerzeugten Gewindeausnehmung 11 und damit des gesamten Gewindefurchers 1 zum vorerzeugten Gewinde 9. Formkeil 7a definiert damit einen Einführbereich 24 des Formgebungsbereichs 3 eines Gewindefurchers 1 (vgl. FIG 12). Alle nachfolgenden Formkeile 7 dringen in den Boden 12 der vorerzeugten Gewindeausnehmung 11 ein und tragen damit zur Fertigerzeugung des Gewindes durch Furchen bei.

FIG 4 bis 8 zeigen auch, dass beim jeweils letzten, das heißt in den Figuren höchsten, Formkeil 7 keine Verbreiterung 19 mehr vorhanden ist. Bei diesem Formkeil 7 entspricht der Profilverlauf weitestgehend dem Profilverlauf des fertigerzeugten Gewindes.

In FIG 4 weist der abgestufte Profilbereich der Formkeile 7, das heißt der Formbereich 20, die Form eines Hügels auf, das bedeutet, er ist an der Formkeilspitze 8 und an den Formkeilflanken 10 gerundet ausgebildet. Ausgehend von der Formkeilspitze 8 verläuft die Rundung an jeder Flanke 10 zunächst konvex gekrümmt, geht dann in eine konkave Rundung über, um schließlich wieder konvex gekrümmt zu verlaufen. Schließlich geht die jeweilige Flanke 10 mit einem Knick in einen geradlinigen Sockelbereich (Verbreiterungsbereich) über. Dieser Knick könnte selbstverständlich auch gerundet ausgebildet werden. In FIG 5 bis 8 ist der Formbereich 20 auf Basis eines Dreiecks ausgebildet, in FIG 5 als gleichseitiges Dreieck, wobei die beiden Formkeilflanken 10 im Formbereich 20 im Winkel von etwa 60° zueinander stehen. In FIG 5 ist die Formkeilspitze 8 spitzwinklig ausgebildet (bis auf die "höheren" Formkeile 7, die eine Abrundung aufweisen), während sie in FIG 6 und 7 abgerundet und in FIG 8 abgerundet und abgeflacht ausgebildet ist. Alle Ausführungsformen sind insbesondere dazu bestimmt, ein metrisches Gewinde zu erzeugen.

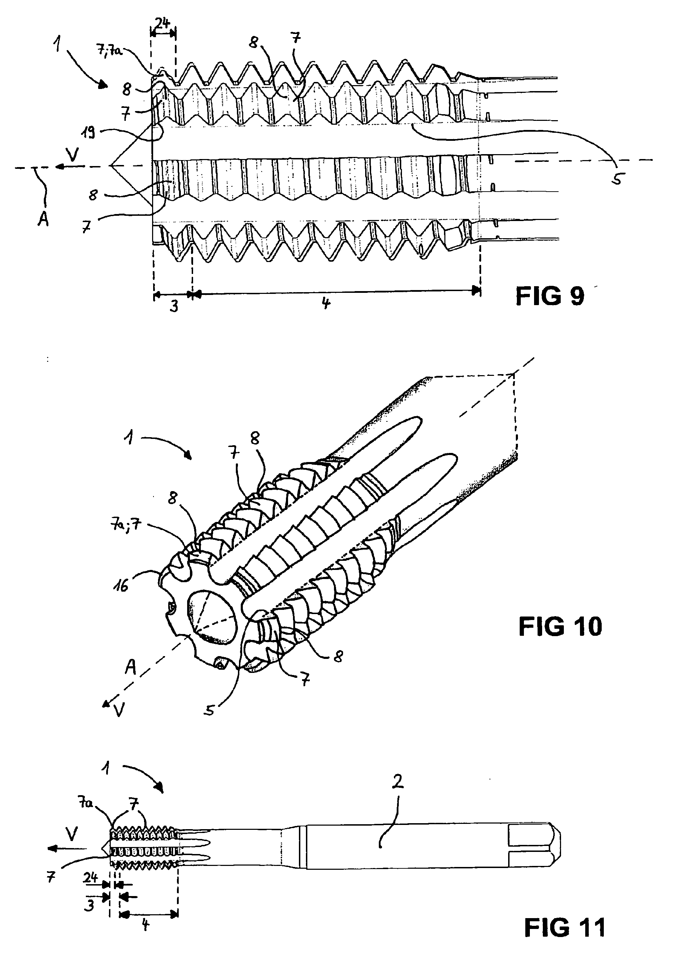

FIG 9 und FIG 10 zeigt eine seitliche Draufsicht bzw. einer dreidimensionalen Darstellung schematisch einen Teil eines Ausführungsbeispiels eines Gewindefurchers 1 gemäß der Erfindung. Die Werkzeugachse A und die Vorschubrichtung V sind dargestellt. Ein Formgebungsbereich 3 weist Formkeile 7 mit Profilen entsprechend FIG 4 auf. Die Verbreiterungen 19 der Formkeile 7 sind zu erkennen. Der Formgebungsbereich 3 grenzt an einen Kalibrierbereich 4 mit Formkeilen 7, die im Wesentlichen identisch ausgebildet sind und im Wesentlichen die Form einer zu erzeugenden fertigerzeugten Gewindeausnehmung aufweisen, an. Die Formkeilspitzen 8 sind jeweils zu erkennen, ebenso der Werkzeugkern 5, auf dem die Formkeile 7 aufsetzen. Ein erster Formkeil 7a ist so ausgebildet, dass er beim Eindringen in die vorerzeugte Gewindeausnehmung 11 (in FIG 9 und 10 nicht dargestellt) nicht in das Werkstück selbst eindringt, d.h. keine Furcharbeit verrichtet. Er definiert daher einen Einführungsbereich 24, dem eine axiale Führungsfunktion, aber keine Furchfunktion zukommt. Zu erkennen ist in FIG 10 auch, dass entgegen der Vorschubrichtung V vor dem erste Formkeil 7a noch ein weiterer, nicht vollständiger Formkeil 16 angeordnet ist. Dieser Formkeil 16 wurde beim Gratentfernen bzw. beim Ausbilden einer Werkzeugfase an der Werkzeugspitze abschliffen. Im kommt dennoch zumindest eine Einführungs- bzw. Einfädelfunktion beim Einsetzen des Werkzeug an das vorerzeugte Gewinde zu.

FIG 10 zeigt ferner, dass das dargestellte Werkzeug 1 im Querschnitt ein Siebeneck aufweist und dass die Formkeile 7 so angeordnet sind, dass jeweils jeder siebte Formkeil 7 in einer Ebene liegt, die auch die Werkzeugachse A enthält. Mit anderen Worten sind die jeweils siebten Formkeile 7 im Wesentlichen entlang einer Linie (Geraden) angeordnet. Bei einem Umlauf um das Werkzeug 1 erfasst man sieben Formkeile 7.

FIG 11 zeigt schematisch eine seitliche Draufsicht auf das vollständige Ausführungsbeispiel eines Gewindefurchers 1 der FIG 9 und 10. Schematisch zu erkennen sind die Formkeile 7. Der Gewindefurcher 1 weist auf der in FIG 11 rechten Seite einen Werkzeugschaft 2 auf zur Aufnahme des Gewindefurchers 1 in eine Gewindeerzeugungseinrichtung (Werkzeugmaschine). Der Arbeitsbereich unterteilt sich in den Formgebungsbereich 3 und den Kalibrierbereich 4, wobei die Höhe der Formkeile 7 im Formgebungsbereich 3 entgegen der Vorschubrichtung V des Gewindefurchers 7 ansteigt und im Kalibrierbereich 4 im Wesentlichen konstant ist. Ferner weist der Gewindefurcher 1 auf der in FIG 11 linken Seite des Formgebungsbereichs 3, aber noch vom Formgebungsbereich 3 umfasst, einen Einführungsbereich 24 auf. In diesem Einführungsbereich 24 ist der Formkeil 7a so ausgebildet, dass er beim Vorschub in das Werkstück zwar in die vorerzeugte Gewindeausnehmung 11 eingreift und damit - über entsprechend ausgebildete Verbreiterungen 19 - die axiale Positionierung des Gewindefurchers 1 relativ zum vorerzeugten Gewinde 9 bestimmt, jedoch nicht in den Boden 12 der vorerzeugten Gewindeausnehmung 11 eindringt, das heißt keine Furcharbeit leistet (in FIG 11 nicht dargestellt). Der Formkeil 7a des Einführbereichs 24 übernimmt somit die axiale Führungsfunktion, die restlichen Formkeile 7 des Formgebungsbereichs 3 übernehmen den Hauptanteil der Furcharbeit und die Formkeile 7 des Kalibrierbereichs 4 kalibrieren und glätten das erzeugte Gewinde und stellen es damit endgültig fertig.

### Bezugszeichenliste

- 1: Gewindefurcher
- 2: Werkzeugschaft
- 3: Formgebungsbereich
- 4: Kalibrierbereich
- 5: Werkzeugkern
- 6: Formgebungskurve
- 7: Formkeile (Drückstollen), Formkeilprofil
- 7a: erster Formkeil, erstes Formkeilprofil
- 8: Formkeilspitze
- 9: vorerzeugtes Gewinde
- 10: Formkeilflanken
- 11: vorerzeugte Gewindeausnehmung
- 12: Boden der vorerzeugten Gewindeausnehmung 11
- 13: Flanken der vorerzeugten Gewindeausnehmung 11
- 14: fertig erzeugtes Gewinde
- 15: fertig erzeugte Gewindeausnehmung
- 16: unvollständig ausgebildeter Formkeil
- 17: Boden der fertig erzeugten Gewindeausnehmung
- 18: Flanke der fertig erzeugten Gewindeausnehmung
- 19: Verbreiterung
- 20: Formbereich
- 21: Verbreiterungsbereich
- 22: Profilabsatz
- 23: Übergangspunkt
- 24: Einführbereich

- A: Werkzeugachse
- V: Vorschubrichtung
- Δa: Abstand
- ΔR: Abstand
- α: Winkel zwischen Formkeilflanken

## Patentansprüche

1. Werkzeug zur spanlosen Fertigerzeugung eines vorerzeugten Gewindes (9, 11), insbesondere eines Innengewindes,
a) umfassend wenigstens einen um eine Werkzeugachse (A) drehbaren oder drehenden Formgebungsbereich (3) mit mehreren Formkeilen (7, 7a),
b) wobei die Formkeile (7, 7a) im Querschnitt zwei Flanken (10) aufweisen, die ausgehend von einer Formkeilspitze (8), die insbesondere einen spitzen Winkel oder eine Abrundung oder eine Abflachung ausbildet, auseinanderlaufen, **dadurch gekennzeichnet, dass**
c) mindestens eine der Flanken (10) zumindest eines Formkeils (7, 7a) mindestens eine Verbreiterung (19) aufweist zur Positionierung, insbesondere Zentrierung, des Formkeils (7, 7a) im vorerzeugten Gewinde (9, 11).

2. Werkzeug nach Anspruch 1, bei dem der radiale Abstand der Formkeilspitzen (8) von der Werkzeugachse (A) entgegen einer Vorschubrichtung (V) des Werkzeugs (1) zunimmt.

3. Werkzeug nach Anspruch 1 oder Anspruch 2, bei dem die Verbreiterung (19) der Flanken (10) bei mehreren Formkeilen (7, 7a), insbesondere bei allen Formkeilen (7, 7a) mit Verbreiterung (19) der Flanken (10), im Querschnitt im Wesentlichen die gleiche Form, insbesondere das gleiche Profil, und/oder die gleichen Abmessungen aufweist und/oder bei dem der Durchmesser des Formkeils (7, 7a) in jeweils gleicher Höhe über der Werkzeugachse (A) im Bereich (21) der Verbreiterung (19) bei mehreren Formkeilen (7, 7a), insbesondere bei allen Formkeilen (7, 7a) mit Verbreiterung (19) der Flanken (10), im Wesentlichen gleich ist.

4. Werkzeug nach einem oder mehreren der vorhergehenden Ansprüche, bei dem zumindest mehrere, insbesondere alle aufeinanderfolgenden Formkeile (7, 7a), deren Flanken (10) eine Verbreiterung (19) aufweisen, in einem sich von der Formkeilspitze (8) bis. zur Verbreiterung (19) erstreckenden Formbereich (20) zumindest abschnittsweise, insbesondere vollständig, im Wesentlichen die gleiche Querschnittsform aufweisen, wobei insbesondere die Querschnittsform des Formbereichs (20) ausgehend von der Formkeilspitze (8) in einem ersten Abschnitt konvex gekrümmt ist und in einem nachfolgenden zweiten Abschnitt konkav gekrümmt ist und vorzugsweise in einem wiederum nachfolgenden dritten Abschnitt, insbesondere in einem Übergangsbereich zur Verbreiterung (19), erneut konvex gekrümmt ist.

5. Werkzeug nach Anspruch 3 oder Anspruch 4, bei dem die Querschnittsform des Formbereichs (20) wenigstens annähernd eine polygonale Form aufweist, insbesondere die Form eines Dreiecks oder eines Vierecks, vorzugsweise eines Trapezes, wobei die Ecken der polygonalen Form spitz und/oder abgerundet ausgebildet sind., und/oder bei dem die Querschnittsform des Formbereichs (20) ein gleichschenkliges Dreieck, vorzugsweise mit einem 60°-Innenwinkel, oder ein gleichseitiges Dreieck oder ein Dreieck mit abgerundeter und/oder abgeflachter Spitze ist.

6. Werkzeug nach einem der vorhergehenden Ansprüche, bei dem die Flankenübergänge zwischen Formbereich (20) und Verbreiterung (19, 21) zumindest teilweise abgerundet ausgebildet sind.

7. Werkzeug nach einem der Ansprüche 1 bis 6 mit mehreren entlang einer die Werkzeugachse (A) spiralförmig oder schraubenförmig oder helixförmig umlaufenden Formgebungskurve (6) aufeinanderfolgend angeordneten Formkeilen (7, 7a)

8. Werkzeug nach einem der Ansprüche 1 bis 6 mit mehreren Formgebungsbereichen, die axial zur Werkzeugachse aufeinander folgend und unter Abstand zueinander angeordnet sind und jeweils senkrecht zur Werkzeugachse verlaufen sowie jeweils wenigstens einen, vorzugsweise mehrere, Formkeil(e) aufweisen, wobei insbesondere Formkeile der verschiedenen Formgebungsbereiche axial zur Werkzeugachse hintereinander angeordnet sind, insbesondere in einer im Wesentlichen parallel zur Werkzeugachse verlaufenden Anordnung oder in einer im Wesentlichen die Werkzeugachse wenigstens teilweise, vorzugsweise schraubenförmig, umlaufenden oder gedrallten Anordnung.

9. Werkzeug nach einem oder mehreren der vorhergehenden Ansprüche, bei dem die Abmessungen der Querschnittsform des Formbereichs (20), insbesondere des Querschnittsprofils des Formbereichs (20), bei entgegen der Vorschubrichtung (V) aufeinanderfolgenden Formkeilen (7, 7a) zunehmen, insbesondere kontinuierlich, vorzugsweise linear.

10. Werkzeug nach einem oder mehreren der vorhergehenden Ansprüche, bei dem die Flanken (10) zumindest mehrerer, insbesondere aller aufeinanderfolgender Formkeilen (7, 7a) eine Konizität aufweisen, wobei vorzugsweise der Konizitätswinkel für verschiedenen Flankenpunkte verschieden ist, insbesondere im Formbereich (20), vorzugsweise an der Formkeilspitze (8), zwischen 5° und 20°, vorzugsweise zwischen 8° und 16° liegt und/oder im Bereich der Verbreiterung (19) zwischen 0° und 2°, vorzugsweise bei etwa 1°, liegt.

11. Werkzeug nach einem oder mehreren der vorhergehenden Ansprüche, bei dem zumindest der oder jeder Formgebungsbereich (3) einen Werkzeugkern (5) aufweist, der sich entlang der Werkzeugachse (A) erstreckt und/oder der entlang der Werkzeugachse (A) einen konstanten Durchmesser aufweist und/oder an dessen Außenfläche die Formkeile (7, 7a) angeordnet sind, wobei vorzugsweise die Höhe der Formkeile (7, 7a) über dem Werkzeugkern (5) entlang der Formgebungskurve (6) entgegen der Vorschubrichtung (V) des Werkzeugs (1) zunimmt.

12. Werkzeug nach einem oder mehreren der vorhergehenden Ansprüche, bei dem die Verbreiterung (19) der Flanken (10) als Sockel des Formkeiles (7, 7a) ausgebildet ist.

13. Werkzeug nach einem oder mehreren der vorhergehenden Ansprüche, bei dem die Verbreiterungen (19) der Formkeile (7, 7a) beim Vorschub (V) in das vorerzeugte Gewinde (9) in Ausnehmungen (11) des vorerzeugten Gewindes (9) eingreifen zur Positionierung, insbesondere Zentrierung, des Formkeils (7, 7a) in der Ausnehmung (11) des vorerzeugten Gewindes (9).

14. Werkzeug nach Anspruch 13, bei dem zumindest die Formkeilspitze (8) bei mindestens einem Formkeil (7, 7a) beim Vorschub in das vorerzeugte Gewinde (9) in einen Bodenabschnitt (12) der Ausnehmung (11) des vorerzeugten Gewindes (9) eindringt.

15. Werkzeug nach Anspruch 13 oder 14, bei dem der oder jeder Formgebungsbereich (3), insbesondere auf seiner in Vorschubrichtung (V) angeordneten Seite, einen Einführungsbereich (24) aufweist mit einem oder mehreren, insbesondere aufeinanderfolgenden, Formkeilen (7, 7a) mit Verbreiterung (19) der Flanken (10), deren Formkeilspitzen (8) beim Vorschub (V) in das vorerzeugte Gewinde (9) nicht in einen Bodenabschnitt (12) der Ausnehmung (11) des vorerzeugten Gewindes (9) eindringen, wobei vorzugsweise der Einführungsbereich (24) den entgegen der Vorschubrichtung (V) ersten Formkeil (7a) umfasst.

16. Werkzeug nach einem oder mehreren der Ansprüche 13 bis 15, bei dem der Durchmesser des Formkeils (7, 7a) zumindest in einem Teilbereich der Verbreiterung (19) mindestens 90 %, insbesondere 95 %, vorzugsweise etwa 99 % des Durchmessers der Ausnehmung (11) des vorerzeugten Gewindes (9) in entsprechender Höhe über der Werkzeugachse (A) des eingeführten Werkzeugs (1) beträgt oder im Wesentlichen gleich dem Durchmesser der Ausnehmung (11) des vorerzeugten Gewindes (9) in entsprechender Höhe über der Werkzeugachse (A) des eingeführten Werkzeugs (1) ist.

17. Werkzeug nach einem oder mehreren der Ansprüche 13 bis 16, bei dem der Durchmesser des Formkeils (7, 7a) in einem sich von der Formkeilspitze (8) bis zur Verbreiterung (19) erstreckenden Formbereich (20), soweit er nicht in den Bodenabschnitt (12) der Ausnehmung (11) des vorerzeugten Gewindes (9) eindringt, weniger als 90 %, insbesondere weniger als 85 %, vorzugsweise weniger als 80 %, des Durchmessers der Ausnehmung (11) des vorerzeugten Gewindes (9) in entsprechender Höhe über der Werkzeugachse (A) des eingeführten Werkzeugs (1) beträgt und/oder bei dem bei dem die Differenz zwischen Ausnehmungsdurchmesser und entsprechendem Formkeildurchmesser im Bereich der Verbreiterung (19, 21) kleiner ist als im Formbereich (20), insbesondere mindestens 10 % kleiner, vorzugsweise mindestens oder etwa 25 % kleiner.

18. Werkzeug nach einem oder mehreren der vorhergehenden Ansprüche, bei dem die Durchmesser der Formkeile (7, 7a) entgegen einer Vorschubrichtung (V) des Werkzeugs (1) in einem sich von der Formkeilspitze (8) bis zur Verbreiterung (19) erstreckenden Formbereich (20) zunehmen, wobei die Zunahme insbesondere in Relation zur Zunahme des radialen Abstands der Formkeilspitzen von der Werkzeugachse (A) steht, vorzugsweise in linearer Abhängigkeit.

19. Werkzeug nach einem oder mehreren der vorhergehenden Ansprüche, bei dem der entgegen der Vorschubrichtung (V) letzte Formkeil (7) des Formgebungsbereichs (3) keine Verbreiterung (19) der Flanken (10) aufweist und seine Querschnittsform und/oder seine Querschnittsabmessungen im Wesentlichen der Querschnittsform und/oder den Querschnittsabmessungen der fertigerzeugten Gewindeausnehmung (15) entsprechen.

20. Werkzeug nach einem oder mehreren der vorhergehenden Ansprüche, bei dem entgegen der Vorschubrichtung (V) auf den Formgebungsbereich (3) ein Kalibrierbereich (4) mit entlang einer um die Werkzeugachse (A) spiralförmig oder schraubenförmig oder helixförmig umlaufenden Kurve aufeinanderfolgend angeordneten Formkeilen (7) folgt, insbesondere direkt an den Formgebungsbereich (3) angrenzt, wobei die Formgebungskurve (6) des Formgebungsbereichs (3) kontinuierlich in die Kurve des Kalibrierbereichs übergeht und beide Kurven die gleiche Steigung entlang der Werkzeugachse (A) aufweisen, wobei vorzugsweise die Querschnittsform und/oder die Querschnittsabmessungen der Formkeile (7) im Kalibrierbereich (4) im Wesentlichen gleich sind und insbesondere im Wesentlichen der Querschnittsform und/oder den Querschnittsabmessungen der fertigerzeugten Gewindeausnehmung (15) entsprechen und/oder wobei vorzugsweise der radiale Abstand der Formkeilspitzen (8) von der Werkzeugachse (A) im Kalibrierbereich (4) im Wesentlichen gleich ist oder entgegen der Vorschubrichtung (V) abnimmt, und vorzugsweise, insbesondere am Übergang zum Formgebungsbereich (3), dem größten radialen Abstand der Formkeilspitze (8) der Formkeile (7) des Formgebungsbereichs (3) entspricht.

21. Werkzeug nach einem oder mehreren der vorhergehenden Ansprüche, bei dem wenigstens der Formgebungsbereich (39) und/oder der Kalibrierbereich (4) in ihrem Querschnitt senkrecht zur Werkzeugachse (A) annähernd eine polygonale Form aufweist bzw. aufweisen, vorzugsweise mit einer Eckenzahl e von drei oder vier oder fünf oder sechs oder sieben, wobei insbesondere alle jeweils e-ten der unmittelbar aufeinanderfolgenden Formkeilspitzen (8) in einer Ebene angeordnet sind, wobei diese Ebene die Werkzeugachse (A) enthält.

22. Verfahren zur Herstellung eines Werkzeugs nach einem oder mehreren der vorhergehenden Ansprüche, bei dem die Formkeile (7, 7a) zumindest teilweise durch Schleifen erzeugt werden, insbesondere mittels Schleifscheiben.

23. Verfahren zum Erzeugen eines Gewindes (14) in einem Werkstück, insbesondere eines Innengewindes,
a) bei dem im oder am Werkstück ein Gewinde (9) vorerzeugt wird, insbesondere spanend oder spanlos, vorzugsweise durch Bohren und/oder Fräsen und/oder Drehen und/oder Schleifen und/oder Wickeln und/oder Furchen, und
b) bei dem die Fertigerzeugung des Gewindes (14) spanlos erfolgt unter Verwindung eines Werkzeugs (1), insbesondere eines Gewindefurchers (1), **dadurch gekennzeichnet, dass** das werkzeug vorzugsweise ein werkzeug nach einem oder mehreren der Ansprüche 1 bis 21 ist, mit mindestens einem Formkeil (7, 7a), der im Querschnitt zwei Flanken (10) aufweist, wobei der Formkeil (7, 7a) im vorerzeugten Gewinde (9, 11) positioniert, insbesondere zentriert, wird durch zumindest eine Verbreiterung (19) mindestens einer seiner Flanken (10).

24. Verfahren nach Anspruch 23, bei dem die Vorerzeugung folgende Schritte umfasst:
a) Erzeugung einer zylindrischen Vorbohrung.
b) Bohren des vorerzeugten Gewindes mit einem Gewindebohrer, wobei der Außendurchmesser des vorerzeugten Gewindes kleiner als der Außendurchmesser des fertigerzeugten Gewindes ist.

25. Verfahren nach Anspruch 23 oder 24, bei dem die Fertigerzeugung des Gewindes (14) folgende Schritte umfasst:
a) Wenigstens ein Formgebungsbereich (3) eines Werkzeugs (1) gemäß Anspruch 7 oder einem auf Anspruch 7 unmittelbar oder mittelbar rückbezogenen Anspruch wird um eine Werkzeugachse (A) gedreht,
b) Der Formgebungsbereich (3) mit entlang einer die Werkzeugachse (A) spiralförmig oder schraubenförmig oder helixförmig umlaufenden Formgebungskurve (6) aufeinanderfolgend angeordneten Formkeilen (7, 7a) wird in eine Vorschubrichtung (V) bewegt.
c) Die Formkeile (7, 7a) greifen während der Bewegung in Vorschubrichtung (V) in das vorerzeugte Gewinde (9, 11) ein, insbesondere werden zumindest einige der Formkeile (7) in eine Werkstückoberfläche (12) im Bereich des vorerzeugten Gewindes (9, 11) eingedrückt zur Weitererzeugung oder Fertigerzeugung des Gewindes.

26. Verfahren nach Anspruch 23 oder 24, bei dem die Fertigerzeugung des Gewindes (14) folgende Schritte umfasst:
a) die axial versetzten Formgebungsbereiche (3) eines Werkzeugs (1) gemäß Anspruch 8 oder einem auf Anspruch 8 unmittelbar oder mittelbar rückbezogenen Anspruch werden um eine Werkzeugachse (A) gedreht und
b) mit einer axialen Vorschubbewegung entlang einer Vorschubrichtung parallel zur Werkzeugachse relativ zu einem Werkstück bewegt und
c) zusätzlich zu der axialen Vorschubbewegung mit einer Zirkularbewegung relativ zum Werkstück bewegt, bei der die Werkzeugachse um eine zentrale Drehachse, die parallel zur Werkzeugachse gerichtet ist und vorzugsweise mit einer Mittelachse des zu erzeugenden oder erzeugten Gewindes zusammenfällt, rotiert wird,
d) Die Formkeile (7, 7a) greifen während der Bewegung in das vorerzeugte Gewinde (9, 11) ein, insbesondere werden zumindest einige der Formkeile (7) in eine Werkstückoberfläche (12) im Bereich des vorerzeugten Gewindes (9, 11) eingedrückt zur Weitererzeugung oder Fertigerzeugung des Gewindes.

27. Verfahren nach einem der Ansprüche 23 bis 26, bei dem die Fertigerzeugung des Gewindes folgenden Schritt umfasst. Formkeile eines entgegen der Vorschubrichtung (V) an den Formgebungsbereich (3) angrenzenden Kalibrierbereichs (4) glätten und/oder kalibrieren das erzeugte Gewinde.

28. Verfahren nach einem der Ansprüche 23 bis 27, bei dem die Fertigerzeugung des Gewindes folgenden Schritt umfasst:
Formkeile (7, 7a), insbesondere mit einer Verbreiterung (19) der Flanken (10), eines an der der Vorschubrichtung (V) des Werkzeugs (1) zugewandten Seite des Formgebungsbereichs (3) angeordneten Einführbereichs (24) greifen während der Bewegung in Vorschubrichtung (V) in das vorerzeugte Gewinde (9, 11) ein, werden aber nicht in eine Werkstückoberfläche (12) im Bereich des vorerzeugten Gewindes (9, 11) eingedrückt.

## Claims

1. Tool for finishing without chip removal a previously created thread (9, 11), in particular an internal thread,
a) comprising at least one forming portion (3) that is rotatable or rotates about a tool axis (A) having a plurality of forming wedges (7, 7a),
b) wherein the forming wedges (7, 7a) in cross-section comprise two flanks (10), which diverge from one another beginning at a forming wedge tip (8), which is shaped in particular as an acute angle or a rounded region or a flattened region, **characterised in that**
c) at least one of the flanks (10) of at least one forming wedge (7, 7a) has at least one expansion (19) for positioning, in particular for centring, the forming wedge (7, 7a) in the previously created thread (9, 11).

2. Tool according to claim 1, wherein the radial distance of the forming wedge tips (8) from the tool axis (A) increases in a direction opposite to a feed direction (V) of the tool (1).

3. Tool according to claim 1 or claim 2, wherein the expansion (19) of the flanks (10) for a plurality of forming wedges (7, 7a), in particular for all forming wedges (7, 7a) with expansion (19) of the flanks (10), has substantially the same cross-sectional shape, in particular the same profile, and/or the same dimensions, and/or wherein the diameter of the forming wedge (7, 7a) at the same height in each case above the tool axis (A) in the region (21) of the expansion (19) is substantially the same for a plurality of forming wedges (7, 7a), in particular for all forming wedges (7, 7a) having expansion (19) of the flanks (10).

4. Tool according to one or a plurality of the preceding claims, wherein the at least a plurality, in particular all consecutive forming wedges (7, 7a), the flanks (10) of which exhibit an expansion (19) with substantially the same cross-sectional shape in a forming region (20), which extends from the forming wedge tip (8) to the expansion (19) at least in sections, in particular completely, such that the cross-sectional shape of the forming region (20) starting from the forming wedge tip (8) is convexly curved in a first section, concavely curved in a subsequent second section, and preferably convexly curved again in a subsequent third section, in particular convexly curved yet again in a transitional region to the expansion (19).

5. Tool according to claim 3 or claim 4, wherein the forming portion (20) has an at least approximately polygonal shape in cross-section, in particular the shape of a triangle or of a quadrangle, preferably of a trapezium, the corners of the polygonal shape being pointed and/or rounded, and/or where the cross-sectional shape of the forming portion (20) is an isosceles triangle, preferably having a 60° internal angle, or an equilateral triangle or a triangle having a rounded and/or flattened tip.

6. Tool according to one of the preceding claims, wherein the transitions of the two flanks between forming portion (20) and expansion (19, 21) are at least partially rounded.

7. Tool according to one of claims 1 to 6 having a plurality of forming wedges (7, 7a) disposed consecutively along a forming curve (6), which runs around the tool axis (A) in a spiral or screw-thread or helical shape.

8. Tool according to one of claims 1 to 6 having a plurality of forming portions, which follow one another axially with respect to the tool axis and are spaced apart from one another and extend in each case perpendicular to the tool axis, and which possess at least one forming wedge, preferably a plurality of forming wedges, such that in particular forming wedges of the different forming portions are disposed one after another axially with respect to the tool axis in an arrangement which is substantially parallel to the tool axis, or in an arrangement which substantially turns or twists at least partially around the tool axis preferably in the form of a screw thread.

9. Tool according to one or a plurality of the preceding claims, wherein the dimensions of the cross-sectional shape of the forming portion (20), in particular of the cross-sectional profile of the forming portion (20) increase, in particular continuously, preferably linearly, where forming wedges (7, 7a) follow each other in a direction opposite to the feed direction (V).

10. Tool according to one or a plurality of the preceding claims, wherein the flanks (10) at least of a plurality, in particular of all, forming wedges (7, 7a) exhibit a conical nature, such that preferably the conicity angle varies for different flank points, in particular in the forming portion (20), preferably at the forming wedge tip (8), between 5° and 20°, preferably between 8° und 16° and/or in the region of the expansion (19) between 0° and 2°, preferably about 1°.

11. Tool according to one or a plurality of the preceding claims, wherein the at least one or each forming portion (3) has a tool core (5) which extends along the tool axis (A) and/or has a constant diameter along the tool core (A) and/or on the outer surface of which the forming wedges (7, 7a) are disposed, such that preferably the height of the forming wedges (7, 7a) increases over the tool core (5) along the forming curve (6) in a direction opposite to a feed direction (V) of the tool (1).

12. Tool according to one or a plurality of the preceding claims, wherein the expansion (19) of the flanks (10) is developed as a pedestal of the forming wedge (7, 7a).

13. Tool according to one or a plurality of the preceding claims, wherein the expansions (19) of the forming wedges (7, 7a) are engaged during forward feed (V) into the previously created thread (9) in corresponding recesses (11) of said previously created thread (9) for positioning, in particular for centring, of the forming wedge (7, 7a) in the recess (11) of the previously created thread (9).

14. Tool according to claim 13, wherein at least the forming wedge tip (8) of at least one forming wedge (7, 7a) penetrates during forward feed into the previously created thread (9) into a ground section (12) of the recess (11) in the previously created thread (9).

15. Tool according to claim 13 or 14, wherein the one or every forming portion (3), in particular on the side disposed in forward feed direction (V), comprises an insertion portion (24) having one or a plurality of, in particular consecutive, forming wedges (7, 7a) having an expansion (19) of the flanks (10), the forming wedge tips (8) of which do not penetrate into a ground section (12) of the recess (11) in the previously created thread (9) during forward feed (V) into the previously created thread (9), and wherein preferably the insertion portion (24) includes the first forming wedge (7a) in a direction opposite to the forward feed direction (V).

16. Tool according to one or a plurality of claims 13 to 15, wherein the diameter of the forming wedge (7, 7a) in at least a sub-region of the expansion (19) is at least 90%, in particular 95%, preferably approximately 99%, of the diameter of the recess (11) in the previously created thread (9) at a corresponding height above the tool axis (A) of the inserted tool (1) or is substantially equal to the diameter of the recess (11) of the previously created thread (9) at a corresponding height above the tool axis (A) of the inserted tool (1).

17. Tool according to one or a plurality of claims 13 to 16, wherein the diameter of the forming wedge (7, 7a) in a forming portion (20), which extends from the forming wedge tip (8) to the expansion (19), insofar as it does not penetrate into the ground section (12) of the recess (11) of the previously created thread (9), is less than 90%, in particular less than 85%, preferably less than 80%, of the diameter of the recess (11) in the previously created thread (9) at a corresponding height above the tool axis (A) of the inserted tool (1) and/or wherein the difference between the recess diameter and the corresponding forming-wedge diameter is smaller in the region of the expansion (19, 21) than in the forming portion (20), in particular at least 10% smaller, preferably at least or approximately 25% smaller.

18. Tool according to one or a plurality of the preceding claims, wherein the diameter of the forming wedges (7, 7a) in a forming region (20), which extends from the forming wedge tip (8) up to the expansion (19), increases in a direction opposite to the forward feed direction (V) of the tool (1), such that the increase corresponds in particular to the increase in the radial distance between the forming wedge tips and the tool axis (A), preferably is a linear function thereof.

19. Tool according to one or a plurality of the preceding claims, wherein the last forming wedge (7) of the forming portion (3), in a direction opposite to the forward feed direction (V), has no expansion (19) of its flanks (10), and wherein its cross-sectional shape and/or its cross-sectional dimensions correspond substantially to the cross-sectional shape and/or the cross-sectional dimensions of the finished thread recess (15).

20. Tool according to one or a plurality of the preceding claims, wherein in a direction opposite to a forward feed direction (V), the forming portion (3) is followed by a calibration portion (4) having forming wedges (7) disposed consecutively along a curve that passes around the tool axis (A), the curve having a spiral or screw-thread or helix shape, in particular directly adjoining said forming portion (3) wherein the forming curve (6) of the forming portion (3) merges continuously with the curve of the calibration portion and both curves have the same pitch along the tool axis (A), wherein preferably the cross-sectional shape and/or the cross-sectional dimensions of the forming wedges (7) in the calibration portion (4) are substantially the same as the cross-sectional shape and/or the cross-sectional dimensions of the finished thread recess (15), and/or wherein preferably the radial distance of the forming wedge tips (8) from the tool axis (A) in the calibration portion (4) is substantially the same, or decreases, in the direction opposite to the forward feed direction (V), and preferably, in particular at the transition to the forming portion (3), corresponds to the largest radial distance between the forming wedge tips (8) of the forming wedges (7) in the forming portion (3).

21. Tool according to one or a plurality of the preceding claims, wherein at least the forming portion (3) and/or the calibration portion (4), in its cross-section perpendicular to the tool axis (A), has or have an approximately polygonal shape, preferably having a number of corners **e** of three or four or five or six or seven, such that in particular every **e**^{th} one of the immediately consecutive forming wedge tips (8) is disposed in a single plane which contains the tool axis (A).

22. Method for producing a tool according to one or a plurality of the preceding claims, wherein the forming wedges (7, 7a) are produced at least partially by grinding, in particular by means of grinding disks.

23. Method for producing a thread (14) in a workpiece, in particular an internal thread,
a) wherein a thread (9) is initially created in or on the workpiece, in particular with or without chip removal, preferably by means of tapping and/or milling and/or turning and/or grinding and/or winding and/or grooving, and
b) wherein finishing of the thread (14) is carried out without chip removal using a tool (1), in particular a thread grooving tool (1), **characterised in that** the tool is preferably a tool according to one or a plurality of claims 1 to 21, having at least one forming wedge (7, 7a), which in cross-section has two flanks (10) such that the forming wedge (7, 7a) is positioned, in particular centred, in the previously created thread (9, 11) by means of at least one expansion (19) of a least one of its flanks (10).

24. Method according to claim 23, wherein the initial production includes the following steps:
a) Producing an initial cylindrical bore.
b) Tapping the initially created thread using a thread tapper, such that the outside diameter of the initial thread is smaller than the outside diameter of the finished thread which is created.

25. Method according to claim 23 or 24, wherein the finished production of the thread (14) includes the following steps:
a) At least one forming portion (3) of a tool (1) according to claim 7 or according to a claim directly or indirectly appendant to claim 7 is rotated about a tool axis (A),
b) The forming portion (3) having forming wedges (7, 7a) disposed consecutively along a forming curve (6), which runs around the tool axis (A) in a spiral or screw-thread or helical shape, is moved in a forward feed direction (V).
c) The forming wedges (7, 7a) engage during the movement in the forward feed direction (V) in the previously created thread (9, 11), in particular at least some of the forming wedges (7) are pressed into a workpiece surface (12) in the region of the previously created thread (9, 11) for continued production or finishing of the thread.

26. Method according to claim 23 or 24, wherein the finished production of the thread (14) includes the following steps:
a) The axially offset forming portions (3) of a tool (1) according to claim 8 or according to a claim directly or indirectly appendant to claim 8 are rotated about a tool axis (A) and
b) are moved by means of an axial forward feed movement along a forward feed direction parallel to the tool relative to a workpiece and
c) are moved, in addition to the axial forward feed movement, by means of a circular movement relative to the workpiece, such that the tool axis is rotated about a central rotary axis, which is aligned parallel to the tool axis and preferably coincides with a central axis of the thread created or to be created,
d) The forming wedges (7, 7a) engage during the movement in the previously created thread (9, 11), in particular at least some of the forming wedges (7) are pressed into a workpiece surface (12) in the region of the previously created thread (9, 11) for continued production of finishing of the thread.

27. Method according to one of claims 23 to 26, wherein finishing of the thread includes the following step:
Forming wedges of a calibration portion (4) adjoining the forming portion (3) in a direction opposite to the forward feed direction (V) smooth and/or calibrate the thread produced.

28. Method according to one of claims 23 to 27, wherein finishing of the thread includes the following step:
Forming wedges (7, 7a), in particular having an expansion (19) of the flanks (10), of an insertion portion (24) disposed on the side of the forming portion (3) facing in the forward feed direction (V) of the tool (1), engage during movement in the forward feed direction (V) in the previously created thread (9, 11) but are not pressed into a workpiece surface (12) in the region of the previously created initial thread (9, 11).

## Revendications

1. Outil pour le finissage sans enlèvement de copeaux d'un filet préformé (9, 11), en particulier d'un taraudage,
a) comprenant au moins une zone de façonnage (3) avec plusieurs coins conformés (7, 7a), pouvant être amenée à tourner ou tournant autour d'un axe d'outil (A),
b) dans lequel les coins conformés (7, 7a) présentent en section transversale deux flancs (10) qui s'écartent en partant d'une pointe de coin conformé (8) qui réalise en particulier un angle aigu ou un arrondi ou un méplat,
**caractérisé en ce que**
c) au moins l'un des flancs (10) d'au moins un coin conformé (7, 7a) présente au moins un élargissement (19) pour positionner, en particulier centrer, le coin conformé (7, 7a) dans le filet préformé (9, 11).

2. Outil selon la revendication 1, dans lequel la distance radiale des pointes de coin conformé (8) par rapport à l'axe d'outil (A) augmente en sens inverse d'une direction d'avance (V) de l'outil (1).

3. Outil selon la revendication 1 ou 2, dans lequel l'élargissement (19) des flancs (10) présente sur plusieurs coins conformés (7, 7a), en particulier sur tous les coins conformés (7, 7a) avec un élargissement (19) des flancs (10), substantiellement la même forme en section transversale, en particulier le même profil, et/ou les mêmes cotes, et/ou dans lequel le diamètre du coin moulé (7, 7a), est substantiellement identique, respectivement à la même hauteur au-dessus de l'axe d'outil (A) dans la zone (21) de l'élargissement (19) pour plusieurs coins conformés (7, 7a), en particulier pour tous les coins conformés (7, 7a) avec un élargissement (19) des flancs (10).

4. Outil selon une ou plusieurs des revendications précédentes, dans lequel au moins plusieurs, en particulier tous les coins conformés (7, 7a) successifs dont les flancs (10) présentent un élargissement (19), présentent dans une zone conformée (20) s'étendant de la pointe de coin conformé (8) jusqu'à l'élargissement (19), au moins par sections, en particulier complètement, substantiellement la même forme de section transversale, dans lequel en particulier la forme de section transversale de la zone conformée (20), en partant de la pointe de coin conformé (8), est courbée de façon convexe dans une première portion et est courbée de façon concave dans une deuxième portion consécutive, et est de préférence de nouveau courbée de façon convexe dans une troisième portion encore une fois consécutive, en particulier dans une zone de transition vers l'élargissement (19).

5. Outil selon la revendication 3 ou 4, dans lequel la forme de section transversale de la zone conformée (20) présente au moins approximativement une forme polygonale, en particulier la forme d'un triangle ou d'un rectangle, de préférence d'un trapèze, dans lequel les coins de la forme polygonale sont réalisés de façon carrée et/ou arrondie, et/ou dans lequel la forme de section transversale de la zone conformée (20) est un triangle isocèle, de préférence avec un angle interne de 60°, ou un triangle isocèle ou un triangle à pointe arrondie et/ou aplatie.

6. Outil selon l'une quelconque des revendications précédentes, dans lequel les transitions de flanc entre la zone conformée (20) et l'élargissement (19, 21) sont réalisées au moins en partie de façon arrondie.

7. Outil selon l'une quelconque des revendications 1 à 6, avec plusieurs coins conformés (7, 7a) disposés successivement le long d'une courbe de façonnage (6) entourant l'axe d'outil (A) à la manière d'une spirale ou d'une vis ou d'une hélice.

8. Outil selon l'une quelconque des revendications 1 à 6, avec plusieurs zones de façonnage qui sont disposées successivement de façon axiale par rapport à l'axe d'outil et à distance les unes des autres et s'étendent respectivement perpendiculairement à l'axe d'outil et présentent respectivement au moins un coin conformé, de préférence plusieurs coins conformés, dans lequel en particulier les coins conformés des différentes zones de façonnage sont disposés successivement de façon axiale par rapport à l'axe d'outil, en particulier dans une disposition s'étendant substantiellement en parallèle à l'axe d'outil, ou dans une disposition entourant substantiellement l'axe d'outil au moins en partie, de préférence à la manière d'une vis, ou dans une disposition tordue.

9. Outil selon une ou plusieurs des revendications précédentes, dans lequel les cotes de la forme de section transversale de la zone conformée (20), en particulier du profil de section transversale de la zone conformée (20), augmentent, en particulier en continu, de préférence de façon linéaire, pour des coins conformés (7, 7a) se succédant en sens inverse de la direction d'avance (V).

10. Outil selon une ou plusieurs des revendications précédentes, dans lequel les flancs (10) au moins de plusieurs, de préférence de tous les coins conformés (7, 7a) successifs présentent une conicité, dans lequel l'angle de conicité est de préférence différent pour différents points de flanc, se situant en particulier dans la zone conformée (20), de préférence au niveau de la pointe de coin conformé (8), entre 5° et 20°, de préférence entre 8° et 16 et/ou dans la zone de l'élargissement (19) entre 0° et 2°, de préférence à environ 1°.

11. Outil selon une ou plusieurs des revendications précédentes, dans lequel au moins ladite ou chaque zone de façonnage (3) présente un noyau d'outil (5) qui s'étend suivant l'axe d'outil (A) et/ou qui présente suivant l'axe d'outil (A) un diamètre constant et/ou sur la surface extérieure duquel sont disposés les coins conformés (7, 7a), dans lequel de préférence la hauteur des coins conformés (7, 7a) augmente au-dessus du noyau d'outil (5) suivant la courbe de façonnage (6) en sens inverse de la direction d'avance (V) de l'outil (1).

12. Outil selon une ou plusieurs des revendications précédentes, dans lequel l'élargissement (19) des flancs (10) est réalisé comme une embase du coin conformé (7, 7a).

13. Outil selon une ou plusieurs des revendications précédentes, dans lequel les élargissements (19) des coins conformés (7, 7a) s'engagent lors de l'avance (V) dans le filet préformé (9) dans des évidements (11) du filet préformé (9) pour positionner, en particulier centrer le coin conformé (7, 7a) dans l'évidement (11) du filet préformé (9).

14. Outil selon la revendication 13, dans lequel au moins la pointe de coin conformé (8), sur au moins un coin conformé (7, 7a), pénètre lors de l'avance dans le filet préformé (9) dans une portion de fond (12) de l'évidement (11) du filet préformé (9).

15. Outil selon la revendication 13 ou 14, dans lequel ladite ou chaque zone de façonnage (3) présente, en particulier sur son côté disposé dans la direction d'avance (V), une zone d'introduction (24) avec un ou plusieurs coins conformés (7, 7a), en particulier successifs, avec un élargissement (19) des flancs (10), dont les pointes de coin conformé (8), lors de l'avance (V) dans le filet préformé (9), ne pénètrent pas dans une portion de fond (12) de l'évidement (11) du filet préformé (9), la zone d'introduction (24) comprenant de préférence le premier coin conformé (7a) en sens inverse de la direction d'avance (V).

16. Outil selon une ou plusieurs des revendications 13 à 15, dans lequel le diamètre du coin conformé (7, 7a), au moins dans une zone partielle de l'élargissement (19), mesure au moins 90 %, en particulier 95 %, de préférence environ 99 % du diamètre de l'évidement (11) du filet préformé (9) à une hauteur correspondante au-dessus de l'axe d'outil (A) de l'outil introduit (1) ou est substantiellement égal au diamètre de l'évidement (11) du filet préformé (9) à une hauteur correspondante au-dessus de l'axe d'outil (A) de l'outil introduit (1).

17. Outil selon une ou plusieurs des revendications 13 à 16, dans lequel le diamètre du coin conformé (7, 7a), dans une zone conformée (20) s'étendant de la pointe de coin conformé (8) jusqu'à l'élargissement (19), dans la mesure où il ne pénètre pas dans la portion de fond (12) de l'évidement (11) du filet préformé (9), mesure moins de 90 %, en particulier moins de 85 %, de préférence moins de 80 % du diamètre de l'évidement (11) du filet préformé (9) à une hauteur correspondante au-dessus de l'axe d'outil (A) de l'outil (1) introduit, et/ou dans lequel la différence entre le diamètre d'évidement et le diamètre de coin conformé correspondant dans la zone de l'élargissement (19, 21) est inférieure à celle dans la zone conformée (20), en particulier inférieure d'au moins 10 %, de préférence inférieure d'au moins ou d'environ 25 %.

18. Outil selon une ou plusieurs des revendications précédentes, dans lequel les diamètres des coins conformés (7, 7a) augmentent en sens inverse d'une direction d'avance (V) de l'outil (1) dans une zone conformée (20) s'étendant à partir de la pointe de coin conformé (8) jusqu'à l'élargissement (19), dans lequel l'augmentation est liée en particulier à l'augmentation de la distance radiale des pointes de coin conformé par rapport à l'axe d'outil (A), de préférence par une dépendance linéaire.

19. Outil selon une ou plusieurs des revendications précédentes, dans lequel le dernier coin conformé (7) de la zone de façonnage (3), en sens inverse de la direction d'avance (V), ne présente aucun élargissement (19) des flancs (10) et sa forme de section transversale et/ou ses cotes de section transversale correspondent substantiellement à la forme de section transversale et/ou aux cotes de section transversale de l'évidement de filet fini (15).

20. Outil selon une ou plusieurs des revendications précédentes, dans lequel, en sens inverse de la direction d'avance (V), la zone de façonnage (3) est suivie d'une zone de calibrage (4) avec des coins conformés (7) disposés successivement suivant une courbe entourant l'axe d'outil (A) à la manière d'une spirale ou d'une vis ou d'une hélice, ladite zone étant en particulier directement adjacente à la zone de façonnage (3), dans lequel la courbe de façonnage (6) de la zone de façonnage (3) passe progressivement à la courbe de la zone de calibrage et les deux courbes présentent la même pente suivant l'axe d'outil (A), dans lequel de préférence la forme de section transversale et/ou les cotes de section transversale des coins conformés (7) dans la zone de calibrage (4) sont substantiellement identiques, et correspondent en particulier substantiellement à la forme de section transversale et/ou aux cotes de section transversale de l'évidement de filet fini (15) et/ou dans lequel de préférence la distance radiale des pointes de coin conformé (8) par rapport à l'axe d'outil (A) dans la zone de calibrage (4) est substantiellement identique ou diminue en sens inverse de la direction d'avance (V), de préférence, en particulier à la transition vers la zone de façonnage (3), correspond à la plus grande distance radiale des pointes de coin conformé (8) des coins conformés (7) de la zone de façonnage (3).

21. Outil selon une ou plusieurs des revendications précédentes, dans lequel au moins la zone de façonnage (3) et/ou la zone de calibrage (4) présentent dans leur section transversale perpendiculairement à l'axe d'outil (A) approximativement une forme polygonale, de préférence avec un nombre de coins e de trois ou quatre ou cinq ou six ou sept, dans lequel en particulier tous les e-ème pointes de coin conformé (8) respectives, immédiatement successives, sont disposées dans un plan, ce plan comprenant l'axe d'outil (A).

22. Procédé de fabrication d'un outil selon une ou plusieurs des revendications précédentes, dans lequel les coins conformés (7, 7a) sont réalisés au moins en partie par meulage, en particulier au moyen de disques abrasifs.

23. Procédé de réalisation d'un filet (14) dans une pièce à travailler, en particulier d'un taraudage,
a) dans lequel dans ou sur la pièce à travailler, un filet (9) est préformé, en particulier avec ou sans enlèvement de copeaux, de préférence par perçage et/ou fraisage et/ou tournage et/ou meulage et/ou bobinage et/ou rainurage, et
b) dans lequel le finissage du filet (14) est effectué sans enlèvement de copeaux en utilisant un outil (1), en particulier un dispositif à rainurer les filets (1), **caractérisé en ce que** l'outil est de préférence un outil selon une ou plusieurs des revendications 1 à 21, avec au moins un coin conformé (7, 7a) qui présente en section transversale deux flancs (10), dans lequel le coin conformé (7, 7a) est positionné, en particulier centré, dans le filet préformé (9, 11) par au moins un élargissement (19) d'au moins un de ses flancs (10).

24. Procédé selon la revendication 23, dans lequel le préformage comprend les étapes suivantes:
a) réaliser un perçage préliminaire cylindrique,
b) percer le filet préformé à l'aide d'un taraud, dans lequel le diamètre extérieur du filet préformé est inférieur au diamètre extérieur du filet fini.

25. Procédé selon la revendication 23 ou 24, dans lequel le finissage du filet (14) comprend les étapes suivantes:
a) au moins une zone de façonnage (3) d'un outil (1) selon la revendication 7 ou selon une revendication se référant directement ou indirectement à la revendication 7, est amenée à tourner autour d'un axe d'outil (A);
b) la zone de façonnage (3) avec des coins conformés (7, 7a) disposés successivement suivant une courbe de façonnage (6) entourant l'axe d'outil (A) à la manière d'une spirale ou d'une vis ou d'une hélice est déplacée dans une direction d'avance (V);
c) les coins conformés (7, 7a) s'engagent pendant le mouvement dans la direction d'avance (V) dans le filet préformé (9, 11), en particulier au moins certains des coins conformés (7) sont enfoncés dans une surface de pièce à travailler (12) dans la zone du filet préformé (9, 11) pour la suite de la réalisation ou le finissage du filet.

26. Procédé selon la revendication 23 ou 24, dans lequel le finissage du filet (14) comprend les étapes suivantes:
a) les zones de façonnage (3) décalées axialement d'un outil (1) selon la revendication 8 ou selon une revendication se référant directement ou indirectement à la revendication 8 sont amenées à tourner autour d'un axe d'outil (A); et
b) sont déplacées avec un mouvement d'avance axial suivant une direction d'avance en parallèle à l'axe d'outil par rapport à une pièce à travailler; et
c) en plus du mouvement d'avance axial, elles sont déplacées avec un mouvement circulaire par rapport à la pièce à travailler, dans lequel l'axe d'outil est amené à tourner autour d'un axe de rotation central qui est orienté en parallèle à l'axe d'outil et coïncide de préférence avec un axe médian du filet à réaliser ou réalisé;
d) les coins conformés (7, 7a) s'engagent pendant le mouvement dans le filet préformé (9, 11), en particulier au moins certains des coins conformés (7) sont enfoncés dans une surface de pièce à travailler (12) dans la zone du filet préformé (9, 11) pour la suite de la réalisation ou le finissage du filet.

27. Procédé selon l'une quelconque des revendications 23 à 26, dans lequel le finissage du filet comprend l'étape suivante:
des coins conformés d'une zone de calibrage (4) adjacente à la zone de façonnage (3) en sens inverse de la direction d'avance (V) lissent et/ou calibrent le filet réalisé.

28. Procédé selon l'une quelconque des revendications 23 à 27, dans lequel le finissage du filet comprend l'étape suivante:
des coins conformés (7, 7a), en particulier avec un élargissement (19) des flancs (10), d'une zone d'introduction (24) disposée sur le côté de la zone de façonnage (3), tourné vers la direction d'avance (V) de l'outil (1), s'engagent pendant le mouvement dans la direction d'avance (V) dans le filet préformé (9, 11), mais ne sont pas enfoncés dans une surface de pièce à travailler (12) dans la zone du filet préformé (9, 11).
